# EUROPÄISCHE PATENTSCHRIFT

(11) **EP 3 268 601 B1**
(45) Veröffentlichungstag und Bekanntmachung des Hinweises auf die Patenterteilung: **03.07.2019**
(21) Anmeldenummer: 16707419.4
(22) Anmeldetag: 01.03.2016
(51) Int. Cl.: F03B 13/06

(54) **DICHTUNGSBAHN ZUR HERSTELLUNG EINER DICHTUNG FÜR EINEN LAGEENERGIESPEICHER UND VERFAHREN ZUR MONTAGE EINER DICHTUNG AUS DICHTUNGSBAHNEN FÜR EINEN LAGEENERGIESPEICHER**
DAMP-PROOF LAYER FOR CREATING A SEAL FOR A POTENTIAL ENERGY STORE, AND METHOD FOR ASSEMBLING A SEAL FROM DAMP-PROOF LAYERS FOR A POTENTIAL ENERGY STORE
BANDE D'ÉTANCHÉITÉ SERVANT À FABRIQUER UN JOINT D'ÉTANCHÉITÉ POUR UN ACCUMULATEUR D'ÉNERGIE POTENTIELLE ET PROCÉDÉ SERVANT À MONTER UN JOINT D'ÉTANCHÉITÉ ISSU DE BANDES D'ÉTANCHÉITÉ POUR UN ACCUMULATEUR D'ÉNERGIE POTENTIELLE

(30) Priorität: 13.03.2015 DE 102015103760
(43) Veröffentlichungstag der Anmeldung: 17.01.2018
(73) Patentinhaber: Heindl Energy GmbH, 70565 Stuttgart (DE)
(72) Erfinder: STENZEL, Gerd, 78647 Trossingen (DE)
(74) Vertreter: Westphal, Mussgnug & Partner Patentanwälte mbB
(86) Internationale Anmeldenummer: PCT/EP2016/054274
(87) Internationale Veröffentlichungsnummer: WO 2016/146373

(56) Entgegenhaltungen:
- EP-A2- 2 492 438
- WO-A1-2011/114199
- AT-U1- 12 566
- CN-A- 101 260 857
- DE-A1-102013 109 601
- US-A1- 2015 056 085

## Beschreibung

Der Ausbau der Nutzung erneuerbarer Energien, insbesondere der Bau zahlreicher Photovoltaik- und Windkraftanlagen, deren Energieproduktion von nicht kontrollierbaren Umweltbedingungen abhängig ist, hat dazu geführt, dass in den Phasen, in denen diese ihre Spitzenleistung liefern Energie im Überfluss vorhanden ist und sogar zu negativen Preisen abgegeben werden muss, während für Phasen, an denen diese Anlagen keinen Beitrag zur Energieversorgung liefern können konventionelle Kraftwerke in Bereitschaft gehalten werden müssen. Dementsprechend hat die Entwicklung von Energiespeichern, insbesondere solchen, die eine große Speicherkapazität haben, eine große Bedeutung gewonnen.

Eine Kategorie derartiger Energiespeicher sind Lageenergiespeicher, bei denen überschüssige Energie dazu genutzt wird, die potentielle Energie einer (großen) Masse zu erhöhen. Neben den seit langen Jahren bekannten Pumpspeicherkraftwerken , bei denen Wasser in ein höher gelegenes Reservoir gepumpt wird, um Lageenergie zu speichern, sind z.B. aus der DE 10 2010 034 757 B4 Lageenergiespeicher bekannt, bei denen eine große Masse unter Verwendung einer Hydraulikflüssigkeit, z.B. Wasser, in einem Hydraulikzylinder durch Einpumpen der Hydraulikflüssigkeit über eine oder mehrere Leitungen relativ zur Erdoberfläche angehoben, so dass die Masse praktisch den Kolben, der im Hydraulikzylinder bewegt wird, darstellt und Energie als potentielle Energie des angehobenen Kolbens gespeichert wird. Dabei kann die Masse insbesondere durch einen ausgeschnittenen Fels gebildet und der notwendige Hydraulikzylinder durch das den ausgeschnittenen Fels umgebende Gestein gebildet werden.

Der große Vorteil bei dieser Konstruktion, bei der Kolbendurchmesser und Hubhöhen von mehreren hundert m realisiert werden können, liegt in der sehr hohen Speicherkapazität der Anlagen, die die von konventionellen Speicherkraftwerken bei weitem übertrifft.

Naturgemäß muss bei derartigen Lageenergiespeichern, die fortan als gattungsgemäße Lageenergiespeicher bezeichnet werden, zwischen der großen Masse, z.B. der Felsmasse, und dem Hydraulikzylinder, z.B. dem umgebenden Gestein, eine Dichtung angeordnet sein, um den unkontrollierten Austritt der Hydraulikflüssigkeit unter Umgehung des Leitungssystems zu vermeiden. Eine Reihe von Vorschlägen für den Aufbau solcher Dichtungen sind beispielsweise in der deutschen Patentanmeldung mit der Anmeldenummer DE 10 2014 102 405.2 offenbart.

Aus der DE 10 2013 109 601 A1 ist eine Zylinderabdichtung bei einem Lageenergiespeicher und ein entsprechendes Verfahren zur Montage der Dichtung zwischen dem Hydraulikzylinder und dem Kolben des Lageenergiespeichers bekannt. In einer Ausführungsform wird dabei ein Rollbalg verwendet, der mit in dichtem Abstand eingespritzten Stahlseil ausgestattet ist. Der Rollbalg wird mit seinem unteren Ende im gesamten Umfang am Zylinder wasserdicht befestigt.

Es müssen Mittel und Wege gefunden werden, bei der Realisierung gattungsgemäßer Lageenergiespeicher die Dichtungen zu installieren, wobei in Anbetracht der Dimensionen und speziellen Anforderungen der gattungsgemäßen Lageenergiespeicher insbesondere eine Montage der Dichtung aus Einzelkomponenten vor Ort und unmittelbar am Lageenergiespeicher nötig ist. Die Aufgabe der Erfindung besteht daher darin, eine Dichtungsbahn zur Herstellung der Dichtung für einen gattungsgemäßen Lageenergiespeicher und ein Verfahren zur Montage einer Dichtung aus solchen Dichtungsbahnen an einem gattungsgemäßen Lageenergiespeicher anzugeben.

Diese Aufgabe wird gelöst durch eine Dichtungsbahn mit den Merkmalen des Patentanspruchs 11 und ein Verfahren mit den Merkmalen des Patentanspruchs 1. Vorteilhafte Weiterbildungen der Erfindung sind Gegenstand der Unteransprüche.

Wegen der Dimensionen eines gattungsgemäßen Lageenergiespeichers, bei dem Kolbendurchmesser und Hubhöhen von mehreren 100m vorliegen können, wird erfindungsgemäß die Dichtung erst während ihrer Installation aus Dichtungsbahnen zusammengesetzt, also aus im Wesentlichen rechteckigen Streifen aus einem Material oder Komposit, das mindestens eine Komponente enthält, die eine Dichtwirkung gegenüber dem Durchtritt eines Fluids hat.

Dabei definiert die größte Ausdehnung der Streifen ihre Länge definiert, und ihre kleinere Ausdehnungsrichtung ihre Breite. Die Dicke eines Streifens ist wiederum sehr viel kleiner als ihre Breite. Die Enden der Dichtungsbahn liegen an den kürzeren, die Breite definierenden Seiten des im Wesentlichen rechteckigen Streifens. Beispielsweise entspricht die Länge einer Bahn etwa 55% der maximalen Hubhöhe des gattungsgemäßen Lageenergiespeichers, für den die Dichtung gedacht ist, typische Breiten liegen bei 3m und typische Dicken bei 1 cm. Als Oberflächen der Dichtungsbahn werden in dieser Offenbarung die Flächen bezeichnet, die durch die Längsseiten und die Breitseiten der Dichtungsbahn begrenzt werden, während die verbleibenden Flächen den Rand der Dichtungsbahn bilden.

Eine erfindungsgemäße Dichtungsbahn zur Herstellung einer Dichtung für einen Lageenergiespeicher weist eine Trägerstruktur aus nebeneinander angeordneten Stahlseilen oder nebeneinander angeordneten Abschnitten eines oder mehrerer Stahlseile auf, die bevorzugt im Wesentlichen parallel zu der die Länge der Bahn definierenden Richtung verlaufen.

Explizit hingewiesen wird an dieser Stelle auf die Tatsache, dass "nebeneinander" nicht notwendig "parallel zueinander" oder "unmittelbar benachbart" bedeutet und es in der Praxis vorteilhaft ist, die Stahlseile der installierten Dichtung zumindest mit einer Verlaufskomponente in radialer Richtung zur Achse der Hubrichtung verlaufen zu lassen, was mit sich bringt, dass der Abstand der Stahlseile voneinander an der dem Kolben zugewandten Seite der Dichtung etwas geringer ist als an der der Innenwand des Hydraulikzylinders zugewandten Seite. Die Praxisrelevanz dieses Verlaufs ergibt sich daraus, dass insgesamt eine kreisringförmige Öffnung abzudichten ist.

Ferner bilden bei der erfindungsgemäßen Dichtungsbahn zumindest Teile der Ebene, in der die Stahlseile liegen oder zumindest Teile einer dazu parallel verlaufenden Ebene eine fluiddichte Fläche bzw. fluiddichte Schicht, so dass die Dichtwirkung zumindest in den Abschnitten der Dichtungsbahn gewährleistet wird, in denen diese benötigt wird. Dies kann, wie unten noch näher erläutert wird, z.B. durch Anordnen eines fluiddichten Gewebes an der Trägerstruktur bewirkt werden oder durch Einbettung der Trägerstruktur in eine geeignete Polymermatrix, z.B. in Gummi, die insbesondere bei der Herstellung der Dichtungsbahn in flüssigem Zustand aufgebracht werden kann und dann erstarrt.

Die Stahlseile können zusätzlich oder alternativ zum Vorsehen einer erstarrten fluiddichten Materialschicht mit einem Gewebe miteinander verbunden sein, wobei im zuletzt genannten Fall das Gewebe fluiddicht sein muss. Dies ist beispielsweise durch eine Verflechtung mit einem Gewebeband oder durch flächiges Verbinden mit einem an die Größe der Trägerstruktur angepassten Gewebestück möglich. Dabei sollte das Gewebe bevorzugt zumindest um einen Faktor dehnbar sein, der dem Verhältnis von Innenradius des Hubzylinders zu Außenradius des Kolbens entspricht.

Erfindungsgemäß sind dabei die Stahlseile an den Enden der Dichtungsbahn jeweils an einem Ankerstück befestigt oder um ein Ankerstück herumgeführt. Diese Ankerstücke dienen insbesondere dazu, die sichere Verankerung der Dichtungsbahnen bzw. der aus solchen Dichtungsbahnen zusammengesetzten Dichtung in der Wand des Kolbens bzw. des Hubzylinders zu ermöglichen.

Ferner ist erfindungsgemäß zwischen jeweils zwei Ankerstücken jeweils ein elastisches Element angeordnet. Durch diese Maßnahme wird erreicht, dass die Enden der Dichtungsbahn bzw. der aus diesen zusammengesetzten Dichtung an gewölbten Oberflächen mit unterschiedlichem Wölbungsradius, nämlich der äußeren Oberfläche des Kolbens und der inneren Oberfläche des Hubzylinders, bündig angeordnet werden können. Die elastischen Elemente können beispielsweise aus Gummi oder Silikon gefertigte Scheiben sein. Die Dicke dieser Scheiben sollte die Fugenbreite, d.h. den Abstands zwischen zwei benachbarten bzw. im Wesentlichen parallel zueinander verlaufenden Abschnitten des Stahlseils in der Trägerstruktur leicht übersteigen.

Um dies zu erreichen, müssen die Enden der Dichtungsbahn einerseits durch Kompression verkürzt und/oder entweder durch Entspannung oder durch Dehnung verlängert werden können, was durch das Vorsehen der elastischen Elemente zwischen den Ankerstücken ermöglicht wird. Andererseits muss eine Anpassung der ursprünglich ebenen Dichtungsbahn an die Wölbung der Oberflächen, an denen die Dichtungsbahn bzw. die aus den Dichtungsbahnen zusammengesetzte Dichtung verankert werden muss, möglich sein. Auch diese Verformbarkeit wird durch die elastischen Elemente erreicht.

In einer bevorzugten Weiterbildung der Erfindung weisen die Ankerstücke und die elastischen Elemente weisen jeweils eine Öffnung auf, durch die ein flexibles Spannmittel geführt ist, so dass der Abstand zwischen zwei Ankerstücken durch Kompression der dazwischen angeordneten elastischen Elemente reduzierbar und/ oder Dehnung der dazwischen angeordneten elastischen Elemente erhöhbar ist. Das Spannmittel ist dadurch unmittelbar in die Dichtungsbahn integriert.

Die Ankerstücke sind bevorzugt als Metallplatten mit darin eingearbeiteter Seilführungsnut ausgeführt, deren durch den kleinsten Abstand zwischen zwei einander gegenüberliegenden Seiten bestimmte Dicke zwischen dem Zweifachen und dem Fünffachen des Durchmessers der verwendeten Stahlseile liegt und bevorzugt dem Zweifachen dieses Durchmessers zuzüglich der Fugenbreite, d.h. des Abstands zwischen zwei benachbarten Abschnitten des Stahlseils in der Trägerstruktur. Bevorzugte Materialien für die Ankerstücke sind Edelstahl oder Aluminium.

Die Außenkontur der Schmalseite der Ankerstücke weist bevorzugt an der dem jeweils entgegengesetzten Ende der Dichtungsbahn zugewandten Seite Ecken, Ausnehmungen oder Vorsprünge auf, da dies eine sichere Verankerung der Ankerstücke in der Innenwand des Hubzylinders bzw. der Außenwand des Kolbens ermöglicht. Einfach kann dies realisiert werden, wenn die Außenkontur der Ankerplatte der Form eines Rechtecks mit einem daran auf der vom entgegengesetzten Ende der Dichtungsbahn abgewandten Seite angefügten Halbkreis entspricht.

Um benachbarte Dichtungsbahnen besonders gut miteinander verbinden zu können, wobei dieses Verbinden zur Herstellung der Dichtung notwendig ist, weist in einer bevorzugten Ausführungsform der Erfindung die Dichtungsbahn an ihrer einen Längsseite einen ersten Verbindungsabschnitt auf, in dem die fluiddichte Schicht und/oder das Gewebe der einen Bandoberfläche dünner ausgeführt ist und an ihrer anderen Längsseite einen zweiten Verbindungsabschnitt auf, in dem zumindest die fluiddichte Schicht und/oder das Gewebe an dieser Oberfläche die flexible Trägerstruktur nach außen hin überragt. Zwei so ausgeführte, benachbarte Dichtungsbahnen können dann einfach miteinander verbunden werden, indem Stoßüberlappungen zwischen dem ersten Verbindungsabschnitt der ersten Dichtungsbahn und dem zweiten Verbindungsabschnitt der zweiten Dichtungsbahn oder zwischen dem ersten Verbindungsabschnitt der zweiten Dichtungsbahn und dem zweiten Verbindungsabschnitt der ersten Dichtungsbahn hergestellt werden und dann diese Verbindungsabschnitte jeweils miteinander schub- und druckfest verklebt und/oder verschweißt werden. Eine Länge der Verbindungsabschnitte von ca. 5 bis 10 cm hat sich dabei als zweckmäßig erwiesen.

Besonders bevorzugt ist dabei eine Ausgestaltung dieser Weiterbildung der Erfindung, bei der im ersten Verbindungsabschnitt fluiddichte Schicht und/oder Gewebe so weite geschwächt sind, dass die Stahlseile dort zumindest teilweise frei liegen, während im zweiten Verbindungsabschnitt der überragende Abschnitt der fluiddichten Schicht und/oder des Gewebes Aufnahmen für diese Stahlseile aufweist. Dadurch wird eine besonders belastbare Verbindung ermöglicht, die zudem noch eine genaue Ausrichtung der miteinander verbundenen Dichtungsbahnen mit sich bringt.

Ergänzend wird explizit darauf hingewiesen, dass im zweiten Verbindungsabschnitt, da dieser keine Stahlseile aufweist, allgemein wie auch in der bevorzugten Ausgestaltung jeweils auch keine Ankerstücke vorgesehen sind.

In einer bevorzugten Ausführungsform der Erfindung wird die fluiddichte Fläche zumindest auch dadurch gebildet (was bedeutet, dass sie neben den nachfolgend genannten Komponenten auch weitere Komponenten aufweisen kann, also nicht nur aus diesen bestehen muss), dass die benachbarten Stahlseile oder Abschnitte eines Stahlseils zumindest einseitig mit einem Gewebe miteinander verbunden sind und/oder dass die Trägerstruktur zumindest abschnittsweise mindestens einseitig entweder mit einer fluiddichten Schicht beschichtet oder mit einem erstarrten fluiddichten Material durchtränkt ist. Als Materialien für die Bildung dieser Schicht bzw. das Durchtränken der Trägerstruktur sind insbesondere Gummi, Silikon, Kautschuk oder ein elastischer Kunststoff geeignet.

Anzumerken ist dazu, dass je nach Konstruktion der Dichtung die Dichtungsbahn nicht zwingend über ihre gesamte Länge hinweg eine Dichtwirkung entfalten muss, sondern teilweise Dichtabschnitte, die eine Dichtwirkung entfalten und für das Fluid durchlässige Schichten enthalten kann bzw. sogar muss, wie beispielsweise der deutschen Patentanmeldung mit der Anmeldenummer DE 10 2014 102 405.2 zu entnehmen ist.

Besonders bevorzugt ist ferner, wenn die Dichtungsbahn auf mindestens einer Seite, insbesondere auf der in installiertem Zustand der Außenwand des Kolbens zugewandten Seite und/oder auf der in installiertem Zustand der Innenwand des Hydraulikzylinders zugewandten Seite, eine Anti-Haft-Schicht aufweist, die einem Anhaften der Dichtungsbahn an der entsprechenden Oberfläche des Kolbens oder des Hydraulikzylinders auch bei hohem Anpressdruck entgegenwirkt. Dadurch wird selbst bei langem Verharren des Lageenergiespeichers in einem gegebenen Ladezustand, insbesondere in vollständig entladenem und/ oder vollständig geladenem Zustand, gewährleistet, dass die Dichtung nicht beschädigt wird, wenn sich der Ladezustand erneut zu ändern beginnt, da sich die Dichtung wegen der Anti-Haft-Schicht leicht von den Oberflächen löst.

Bei dem erfindungsgemäßen Verfahren zur Montage einer Dichtung aus Dichtungsbahnen, insbesondere zur Montage einer Rollmembrandichtung, wie sie in der deutschen Patentanmeldung mit der Anmeldenummer DE 10 2014 102 405.2 offenbart ist, aus Dichtungsbahnen, an einem Lageenergiespeicher mit einem Hydraulikzylinder, in dem ein Kolben zur Speicherung von Energie in Form von potentieller Energie des Kolbens angeordnet ist, wobei die Position des Kolbens relativ zur Erdoberfläche veränderbar ist, mit einer Pumpe, mit der eine Hydraulikflüssigkeit über Leitungen in den Hydraulikzylinder pumpbar ist, so dass der Kolben angehoben wird, und mit einem Generator zur Umwandlung von Strömungsenergie von beim Absinken des Kolbens aus dem Hydraulikzylinder verdrängter Hydraulikflüssigkeit in Elektrizität, wobei die Dichtung zwischen dem Hydraulikzylinder und dem Kolben angeordnet ist, werden die folgenden Schritte durchgeführt:
a) Bereitstellen von Dichtungsbahnen oder Gruppen von - miteinander verbundenen Dichtungsbahnen,
b) Bereitstellen eines Krans auf der Oberseite des Kolbens oder am oberen Rand des Hubzylinders,
c) Bereitstellen eines oberen Ankerkastens,
d) Bereitstellen eines unteren Ankerkastens,
e) Anhängen der Dichtungsbahnen oder der miteinander verbundenen Gruppen von Dichtungsbahnen an den Kran,
f) Positionieren der Dichtungsbahnen oder der Gruppen von miteinander verbundenen Dichtungsbahnen, mit dem Kran, so dass das frei hängende Ende der Dichtungsbahnen oder der Dichtung sich auf der Höhe des oberen Ankerkastens befindet,
g) Verbinden der Dichtungsbahnen oder der Gruppen von miteinander verbundenen Dichtungsbahnen miteinander, so dass eine Dichtung entsteht,
h) Einspannen der frei hängenden Enden der Dichtungsbahnen oder der Gruppen von miteinander verbundenen Dichtungsbahnen oder der Dichtung in den oberen Ankerkasten,
i) Weiteres Verfahren der Dichtungsbahnen oder der Gruppen von miteinander verbundenen Dichtungsbahnen oder der Dichtung mit dem Kran in den Spalt zwischen Kolben und Hydraulikzylinder, so dass das Ende der Dichtungsbahnen oder der Gruppen von miteinander verbundenen Dichtungsbahnen oder der Dichtung, an dem der Kran angreift, etwa auf die Höhe des unteren Ankerkastens gebracht wird,
j) Lösen der Verbindung zum Kran, und
k) Einspannen des sich auf Höhe des unteren Ankerkastens befindlichen Endes der Dichtungsbahnen oder der Gruppen von miteinander verbundenen Dichtungsbahnen oder der Dichtung in den unteren Ankerkasten.

Grundsätzlich ist zunächst anzumerken, dass die vorstehend genannten Schritte nicht zwingend in der genannten Reihenfolge durchgeführt werden müssen. Insbesondere ist die Reihenfolge der "Bereitstellungsschritte" a) bis d) variabel. Grundsätzlich kann auch die Verankerung im unteren Ankerkasten sowohl vor als auch nach der Verankerung im oberen Ankerkasten durchgeführt werden und das Verbinden von Dichtungsbahnen oder Gruppen von miteinander verbundenen Dichtungsbahnen kann erfolgen, während diese vom Kran hängen, einseitig eingehängt oder beidseitig eingehängt sind. Die Reihenfolge, in der die Verankerung im oberen und unteren Ankerkasten durchgeführt wird, beeinflusst dann auch die konkrete Ausgestaltung der Schritte, in denen der Kran mit den Dichtungsbahnen, den miteinander verbundenen Dichtungsbahnen oder der Dichtung verfahren wird.

Wenn die Alternativen Dichtungsbahnen, miteinander verbundene Dichtungsbahnen und teilweise auch noch Dichtung Erwähnung in den Ansprüchen finden, erfolgt dies aus folgendem Grund: Anzumerken ist zunächst, dass die Breite der Dichtungsbahnen fertigungstechnisch derzeit auf einige Meter begrenzt ist. Während es derzeit nicht praktikabel scheint, eine komplette Dichtung zu einem Lageenergiespeicher zu schaffen und dort zu installieren, so dass eine modulare Installation, bei der zumindest einige Dichtungsbahnen erst am Lageenergiespeicher miteinander verbunden werden, unausweichlich scheint, scheint die Handhabung mehrerer Dichtungsbahnen, die bereits miteinander verbunden sind, beherrschbar zu sein und bringt den Vorteil mit sich, dass die Zahl der in situ herzustellenden Verbindungen reduziert und in das günstigere Arbeitsumfeld der Herstellungsstätte der Dichtungsbahnen verlagert werden kann. Deshalb wird neben dem Begriff "Dichtungsbahn" auch der Begriff "Gruppen von miteinander verbundenen Dichtungsbahnen" verwendet. Anders formuliert steht im Sinne dieser Offenbarung die Bezeichnung "Dichtungsbahn" nicht nur für einzelne Dichtungsbahnen, sondern auch für mehrere, miteinander verbundene Gruppen von Dichtungsbahnen und ist sogar für eine aus solchen Dichtungsbahnen zusammengesetzte Dichtung verwendbar.

Im Verlauf des Verfahrens müssen die Module, aus denen die Dichtung zusammengesetzt wird, also die Dichtungsbahnen oder die Gruppen von miteinander verbundenen Dichtungsbahnen, miteinander verbunden werden. Dadurch entsteht dann die Dichtung. Auch nach dem Verbinden können allerdings noch Abschnitte der miteinander verbundenen Dichtungsbahnen, insbesondere deren Ankerstücke, relativ zueinander beweglich sein.

Je nachdem zu welchen Zeitpunkt die Verbindung hergestellt wird, wird bei den nachfolgenden Positionierschritten mit Hilfe des Kranes, mit denen die Verankerung über die an den Dichtungsbahnen vorgesehenen Ankerstücken in den vorgesehenen Ankerkästen ermöglicht wird, und bei der Verankerung mit Dichtungsbahnen, Gruppen von miteinander verbundenen Dichtungsbahnen oder mit der kompletten Dichtung gearbeitet, so dass diese Alternativen sämtlich in der Anspruchsformulierung zu berücksichtigen sind.

Mit dem oberen Ankerkasten ist der Ankerkasten gemeint, der zum Zeitpunkt der Installation der Dichtung, d.h. bei entladenem Lageenergiespeicher, weiter vom Boden des Hubzylinders entfernt ist als der untere Ankerkasten. Allgemein definiert die Geometrie des -in vielen Fällen im Wesentlichen zylindersymmetrischen- Lageenergiespeichers und insbesondere seine Hubachse bestimmt auch die Bedeutung der Begriffe "außen", "innen", "oben" und "unten" im Kontext eines solchen Lageenergiespeichers. "Oben" entspricht der Richtung, in die der Kolben sich bei Speicherung von Energie im Lageenergiespeicher bewegt, "unten" der Richtung, in die der Kolben sich bei Entnehmen von Energie aus dem Lageenergiespeicher bewegt. "Außen" bedeutet radial von der Hubachse weg, "innen" radial auf die Hubachse zu.

Allerdings ist das Abarbeiten der Schritte e) bis k) in der angegebenen Reihenfolge mit einer Reihe von Vorteilen versehen und deshalb bevorzugt. Da die Dichtung und somit auch die Dichtungsbänder bzw. Gruppen von miteinander verbundenen Dichtungsbändern im Fall einer Rollmembran-Dichtung eine Länge haben, die die halbe Hubhöhe etwas übersteigt, kann durch die Positionierung gemäß Schritt f) erreicht werden, dass die glatte Kolbenoberfläche als Unterlage bzw. Widerlager bei der Verbindung der Dichtungsbänder oder der Gruppen von Dichtungsbändern miteinander dienen kann, die zudem noch im oberen Bereich des Kolbens, der leichter zugänglich ist und um den herum zusätzlicher Arbeitsraum leichter geschaffen werden kann, wenn dies nötig ist, erfolgt.

Zudem wird dadurch, dass zunächst das Einhängen am oberen Ankerkasten erfolgt, ermöglicht, dass die Ankerstücke im Wesentlichen unbelastet sind, wenn sie in den oberen Ankerkasten eingespannt werden, was ihre Handhabung erleichtert. Wird die im oberen Ankerkasten eingespannte Dichtungsbahn dann weiter abgelassen, wird sie im Endzustand im Wesentlichen durch die Verbindung zwischen Ankerstücken und oberem Ankerkasten gehalten und die Verbindung zum Kran kann gelöst werden, so dass auch das Einspannen in den unteren Ankerkasten an Ankerstücken der Dichtungsbahn erfolgen kann, während die Ankerstücke im Wesentlichen unbelastet sind.

Erkauft wird dieser Vorteil allerdings damit, dass die Dichtungsbahn, Gruppe von miteinander verbundenen Dichtungsbahnen oder Dichtung beim Ablassen im Spalt zwischen Wand des Hubzylinders und Kolben einmal "umgekrempelt" werden muss, so dass ihre zunächst nach außen zeigende Seite im fertig montierten Zustand nach innen zeigt. Sollte dies aus geometrischen Gründen nicht machbar sein, sieht die bevorzugte Lösung dieses Problems vor, dass die Verbindung mit dem Kran nicht über an den Ankerstücken angreifenden Klammern erfolgt, sondern über an den Dichtungsbändern vorgesehene Haltemittel, z.B. Ösen in die ein Kranhaken eingreifen kann. Die Dichtungsbänder werden dadurch in einem Zustand in den Spalt abgelassen, in dem die Ankerstücke an beiden Enden des Dichtungsbands frei herabhängen, also in Richtung auf den Boden des Lageenergiespeichers zeigen. Sobald der Bereich des oberen Ankerkastens erreicht ist, kann dort die Befestigung der Ankerstücke erfolgen. nach weiterem Absenken des Kranhakens erfolgt dann die Verankerung am unteren Ankerkasten.

In einer bevorzugten Ausführungsform des Verfahrens wird im Schritt b) ein Kran bereitgestellt, der für jede Dichtungsbahn oder für jede Gruppe von miteinander verbundenen Dichtungsbahnen mindestens eine Winde aufweist, wobei die Winden insbesondere unabhängig voneinander auf einem Kreisbogen verfahrbar sind. Dies erleichtert eine Positionierung der Dichtungsbahnen oder miteinander verbundener Dichtungsbahnen relativ zueinander während ihre Verbindung durchgeführt oder vorbereitet wird.

Zudem kann eine solche Verfahrbarkeit des Krans auch dazu genutzt werden, dass die Werkzeuge, mit denen die Verbindungen hergestellt werden, nur an einer Stelle am Hydraulikzylinder vorgesehen werden müssen, weil die jeweils herzustellende Naht durch Rotation an den Ort des Werkzeugs gebracht werden kann. Dies ist insbesondere dann sinnvoll, wenn der Spalt zwischen Hydraulikzylinder und Kolben lokal erweitert werden muss, um den Einsatz dieser Werkzeuge zu ermöglichen.

Besonders zweckmäßig ist, wenn im Schritt c) der obere Ankerkasten und im Schritt e) der untere Ankerkasten bereitgestellt werden, indem in die Außenwand des Kolben oder in die Innenwand des Hydraulikzylinders umlaufend eine Nut oder Ausnehmungen eingebracht werden, in der ein Profil, bevorzugt Stahlprofil, angeordnet wird, das lokal an die Außenkontur der Schmalseite der Ankerstücke angepasst ist und indem ein Fixiermittel zum Fixieren der Ankerstücke im Ankerkasten in der Ausnehmung oder am Profil, bevorzugt Stahlprofil, bereitgestellt wird.

Eine bevorzugte Weiterbildung der Erfindung sieht vor, dass im Schritt e) das Anhängen an den Kran über eine kreisbogenförmige Montage-Traverse erfolgt, an der die Dichtungsbahn oder die Gruppe von miteinander verbundenen Dichtungsbahnen befestigt sind. Dadurch werden die Dichtungsbahnen bereits an die Form angenähert, in der sie in die Ankerkästen eingespannt werden müssen, was dies erheblich erleichtert. Der Radius, der den Kreisbogen der Montage-Traverse definiert sollte dabei zwischen dem Radius des Kolbens und dem Radius des Innenraums des Hydraulikzylinder liegen und kann beispielsweise durch den Mittelwert dieser Radien vorgegeben sein. Besonders bevorzugt ist es dabei, wenn die Montage-Traversen miteinander verbindbar sind, und zwar so, dass dabei ein Überlapp zwischen den Montage-Traversen herbeigeführt wird, der dem angestrebten Überlapp bei der Herstellung der Verbindung zwischen benachbarten Dichtungsbahnen oder benachbarten Gruppen von miteinander verbundenen Dichtungsbahnen entspricht. Dies kann deren Ausrichtung erheblich vereinfachen.

Besonders bevorzugt ist es dabei, wenn im Schritt e) das Anhängen an den Kran unter Verwendung mechanisch zu öffnender Klammern, die an Ankerstücken der Dichtungsbahn oder der Gruppe von miteinander verbundenen Dichtungsbahnen angreifen, erfolgt. Dies erlaubt es auf einfache Weise, die Ankerstücke während sie im Spalt angeordnet sind durch Betätigung dieses Mechanismus freizugeben. Dazu können gegebenenfalls dieselben Manipulatoren bzw. Hebelanordnungen verwendet werden, die zum Einspannen der Ankerstücke verwendet werden.

Das Einspannen der Ankerstücke in den oberen bzw. unteren Ankerkasten kann wesentlich vereinfacht werden, wenn vor dem Einspannen in den Schritten h) und k) in oder an den Dichtungsbahnen angeordnete Spannmittel eingesetzt werden, um die Breite des jeweils einzuspannenden Endes der Dichtungsbahn an den Innenradius des Hubzylinders bzw. den Außenradius des Kolbens - genauer gesagt an die durch die genannten Radien vorgegebenen Bogenlängen- anzupassen.

Gemäß einer besonders bevorzugten Weiterbildung des Verfahrens ist vorgesehen, dass vor der Durchführung des Schritts k) die Außenwand des Kolbens und/oder die dieser zugewandte Seite der Dichtungsbahn, der Gruppe von Dichtungsbahnen oder der Dichtung mit einem Schmiermittel besprüht wird, das insbesondere die Haftung zwischen der Außenwand des Kolbens und dem Material, aus dem die im entladenen Zustand des Lageenergiespeichers dem Kolben zugewandte Seite der Dichtungsbahn, der Gruppe der Dichtungsbahnen oder der Dichtung besteht.

Da nach der Installation der Dichtung der Lageenergiespeicher mit dem Fluid, mit dem er betrieben werden soll, befüllt wird, wird in der Phase, in der sich der Kolben noch nicht zu heben beginnt, ein signifikanter Abschnitt der Dichtung an die Außenwand des Kolbens gepresst, bis der Druck ausreicht, um den Kolben anzuheben. Durch das vorherige Besprühen mit einem Schmiermittel wird verhindert, dass die Dichtung an der Oberfläche des Kolbens festklebt und dann, wenn sich der Kolben zu bewegen beginnt, beschädigt oder gar zerstört wird. Allgemein kann es zweckmäßig sein, auch während des Betriebs des Lageenergiespeichers bei dessen Bewegung kontinuierlich oder periodisch Schmiermittel nachzusprühen, um eine möglichst lange Lebensdauer der Dichtung zu gewährleisten. Allerdings ist das Risiko für Beschädigungen beim Druckaufbau am Beginn einer Betriebsphase am größten, weil es dann zu einer Längenanpassung der Dichtung kommt, welche noch nicht von einer Bewegung des Kolben begleitet wird.

Als vorteilhaft hat sich ferner herausgestellt, wenn im Bereich unterhalb des unteren Ankerkastens ein mehrteiliger, insbesondere aus Kreisringsegmente überdeckenden Schlauchstücken zusammengesetzte Schlauchtorus oder ein einteiliger Schlauchtorus bereitgestellt wird. Der Innendurchmesser des Schlauchs, aus dem der Schlauchtorus gebildet wird, sollte idealerweise der mittleren Breite des Spaltes zwischen Außenwand des Kolbens und Innenwand des Hubzylinders entsprechen. Vor, bevorzugt aber nach der Bereitstellung wird der Schlauchtorus bzw. werden die Segmente eines mehrteiligen Schlauchtorus mit einer Flüssigkeit, deren Dichte geringer als die Dichte des zum Betrieb des Lageenergiespeichers verwendeten Fluids ist, befüllt. Dementsprechend schwimmt der Schlauchtorus auf dem zum Betrieb verwendeten Fluid und wird durch die Auftriebskraft an die jeweilige nach oben gewölbte "Umschlagstelle" der Dichtung, an der diese ihre Verlaufsrichtung wechselt, angepresst.

Ein solcher an die Spaltbreite angepasster Schlauchtorus wirkt als effektive Hilfsdichtung, die im Fall einer Beschädigung der Dichtung einen unkontrollierten Rücksturz des Kolbens in die Position, die er bei vollständig entladenem Lageenergiespeichers einnimmt, entgegen. Lecks, die an der Umschlagstelle selbst auftreten, werden von ihm unmittelbar abgedichtet. Lecks, die in einem der Seitenabschnitte der Dichtung, die in Kontakt mit der Außenwand des Kolbens oder der Innenwand des Zylinders stehen, können ebenfalls nicht zu einem rapiden Flüssigkeitsverlust führen, da durch den an die Spaltbreite angepassten Innendurchmesser des Schlauchtorus die Form der Umschlagstelle stabilisiert wird und die Flüssigkeit allenfalls durch einen schmalen Spalt austreten kann.

Besonders bevorzugt ist eine Variante des Verfahrens, bei der der Radius des Kolbens in einem Abschnitt zwischen der Oberseite des Kolbens und dem oberen Ankerkasten reduziert wird. Dies vergrößert nicht nur den zur Installation der Dichtungsbahnen, Gruppen von Dichtungsbahnen oder der Dichtung und insbesondere zum Verbinden der Dichtungsbahnen oder Gruppen von Dichtungsbahnen miteinander verfügbaren Bauraum, sondern erleichtert auch den Zugang zur Dichtung bei Inspektions- und Wartungsarbeiten.

Wenn die Schritt h) bis k) des Verfahrens in der angegebenen Reihenfolge ausgeführt werden, kann das dann notwendige "Umkrempeln" der Dichtungsbahn oder der Anordnung von Dichtungsbahnen oder der Dichtung während des Schritts i) wesentlich erleichtert werden, wenn sie dabei mit einem Ballastmittel belastet wird. Besonders geeignet ist dabei die Verwendung der Hydraulikflüssigkeit, insbesondere von Wasser.

Die Erfindung wird nachfolgend anhand von Figuren, die Ausführungsbeispiele zeigen, näher erläutert. Es zeigt:
- Fig.1:: den schematischen Aufbau eines Lageenergiespeichers,
- Fig.2a:: eine schematische Darstellung des Schritts e) der erfindungsgemäßen Verfahrens,
- Fig.2b:: eine Klammer, die im Schritt e) verwendet werden kann in einer ersten Position,
- Fig.2c:: die Klammer aus Fig. 2b in einer zweiten Position,
- Fig.2d:: einen Aspekt des Schritts f) des erfindungsgemäßen Verfahrens,
- Fig.2e:: einen Aspekt des Schritts g) des erfindungsgemäßen Verfahrens,
- Fig.2f:: einen Aspekt des Schritts h) des erfindungsgemäßen Verfahrens,
- Fig.2g:: eine Momentaufnahme während des Schritts i) des erfindungsgemäßen Verfahrens,
- Fig.2h:: einen Aspekt des Schritts j) des erfindungsgemäßen Verfahrens,
- Fig.3a:: eine Teildarstellung einer Aufsicht auf ein Beispiel für einen gemäß Schritt b) bereitzustellenden Kran,
- Fig.3b:: eine zweite Ansicht des Krans aus Fig. 3a mit einer angehängten Dichtungsbahn,
- Fig.3c:: eine dritte Ansicht des Krans aus Fig. 3a mit zwei angehängten Dichtungsbahnen,
- Fig.4a:: eine schematische Darstellung einer Rollmembrandichtung in der Lage, die sie vollständig entladenem Lageenergiespeicher einnimmt, wenn er mit Hydraulikflüssigkeit befüllt ist,
- Fig.4b:: eine schematische Darstellung der Lage der Dichtungsanordnung aus Figur 4a bei halb geladenem Lageenergiespeicher,
- Fig.4c:: eine schematische Darstellung der Lage der Dichtungsanordnung aus Figur 4a bei vollständig geladenem Lageenergiespeicher,
- Fig.5a:: eine Ansicht der Trägerstruktur einer erfindungsgemäßen Dichtungsbahn,
- Fig.5b:: eine vergrößerte Ansicht einer ersten besonders bevorzugten Form eines Verbindungsabschnitts an einem Ende einer Dichtungsbahn,
- Fig.5c:: eine schematische Darstellung des Herstellens einer Verbindung zwischen einem ersten Verbindungsabschnitt einer Dichtungsbahn und einem zweiten Verbindungsabschnitt einer weiteren Dichtungsbahn mit Verbindungsabschnitten gemäß Figur 5b,
- Fig.5d:: den Aufbau eines Endabschnitts einer erfindungsgemäßen Dichtungsbahn,
- Fig.5e:: ein Ankerstück und ein elastisches Element
- Fig.5f:: eine Endscheibe mit Seilverankerung,
- Fig.5g:: eine Endscheibe ohne Seilverankerung mit elastischer Auflage,
- Fig.5h:: eine vergrößerte Ansicht einer zweiten besonders bevorzugten Form eines Verbindungsabschnitts an einem Ende einer Dichtungsbahn,
- Fig.5i:: eine schematische Darstellung des Herstellens einer Verbindung zwischen einem ersten Verbindungsabschnitt einer Dichtungsbahn und einem zweiten Verbindungsabschnitt einer weiteren Dichtungsbahn mit Verbindungsabschnitten gemäß Figur 5h,
- Fig.6a:: eine erste Ausgestaltung eines Ankerkastens,
- Fig.6b:: eine zweite Ausgestaltung eines Ankerkastens,
- Fig.7a:: eine vergrößerte Querschnittsansicht der Umschlagstelle der Dichtung mit einer Hilfsdichtung,
- Fig.7b:: eine Prinzipskizze einer modular aufgebauten Hilfsdichtung, geschnitten in Unfangsrichtung,
- Fig.7c:: ein Montage-Gestell für die Hilfsdichtung,
- Fig.8a:: eine optionale Gestaltung eines Endabschnitts der Dichtung vor vollständiger Befüllung des Spalts mit Hydraulikfluid, und
- Fig.8b:: den Endabschnitt der Dichtung aus Fig. 8a bei vollständig mit Hydraulikfluid befülltem Spalt.

Soweit sich Figuren auf dieselbe Ausführungsform der Erfindung beziehen, werden identische Bezugszeichen verwendet.

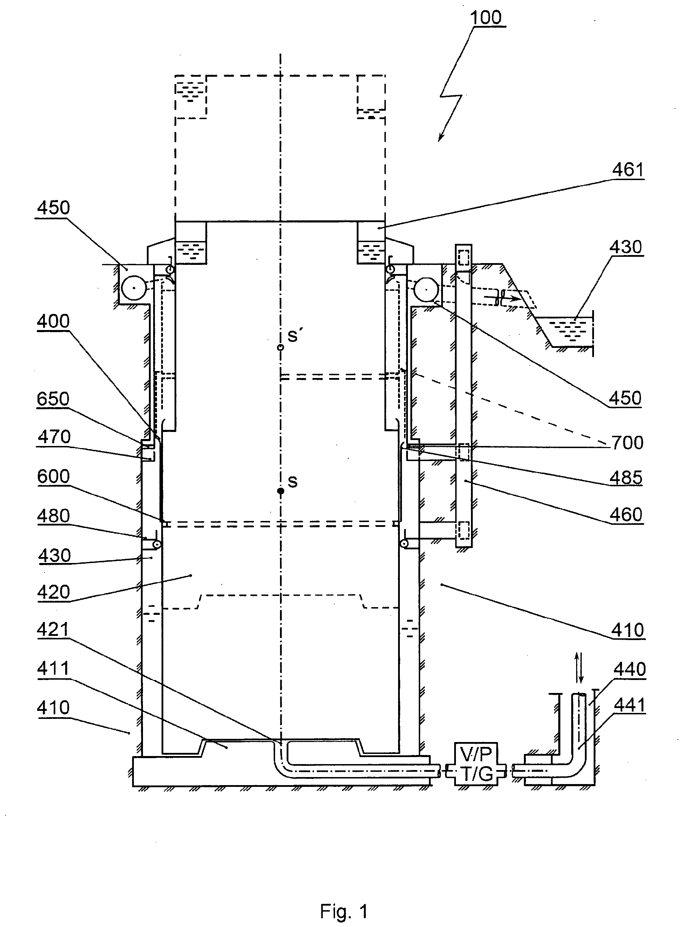

Figur 1 zeigt eine schematische Darstellung einer ersten Ausführungsform eines Lageenergiespeichers 100 mit Hydraulikzylinder 410 und Kolben 420 mit in Ankerkästen 600, 650 montierter Dichtung 400 im Querschnitt. Am Boden des Hydraulikzylinders 410 ist ein Lagerblock 411 angeordnet. Der Lagerblock 411 greift, wenn der Kolben 420 im in Figur 1 mit durchgezogenen Linien dargestellten, vollständig entladenen Zustand des Lageenergiespeichers 400 abgesenkt ist, eine korrespondierende Öffnung 421 im Boden des Kolbens 420 ein.

Durch diese Korrespondenz wird sichergestellt, dass der Kolben 420 immer in derselben, definierten Orientierung im Hydraulikzylinder 410 bleibt und, sofern der Lagerblock nicht rotationssymmetrisch zur Längsachse des Kolbens 420 ist, eine Drehung des Kolbens 420 im Hydraulikzylinder 410 vermieden.

Skizzenhaft dargestellt ist in Figur 1 ferner ein Transport-, Versorgungs- und Turbinenschacht 440, der parallel zur Hubrichtung des Kolbens 420 des Lageenergiespeichers 100 verläuft und eine Versorgungsleitung 441 zum Boden des Hydraulikzylinders 410, durch die der Zu- und Abfluss von Hydraulikflüssigkeit 430 in den Innenraum des Hydraulikzylinders 410 erfolgen kann. Bei abgepumpter Hydraulikflüssigkeit 430 und in der Bauphase des Lageenergiespeichers 100 ist durch Transport-, Versorgungs- und Turbinenschacht 440 und Versorgungsleitung 441 der Zugang zum Innenraum des Hydraulikzylinders 410 im Bereich von dessen Boden möglich.

In der Figur 1 sind ferner schematisch Pumpe P, Turbine T, Generator G und Ventile V bzw. Schleusen V, die für eine Änderung des Ladezustands des Lageenergiespeichers 100 geöffnet werden und ansonsten geschlossen bleiben, um einen gegebenen Füllstand von Hydraulikflüssigkeit 430 zu halten, in der Versorgungsleitung 441 angeordnet dargestellt, diese können aber auch anders angeordnet sein. Ebenfalls dargestellt ist ein Vorratsreservoir 431 für die Hydraulikflüssigkeit 430.

Bei dem in Figur 1 dargestellten Lageenergiespeicher 100 ist der obere Rand des Hydraulikzylinders 410 als umlaufender Betonring 450 ausgeführt

Ebenfalls in Figur 1 zu erkennen ist, dass im oberen Bereich des Kolbens 420 des Lageenergiespeichers 100 ein Tank 461, der in in der Schnittdarstellung der Figur 1 nicht erkennbare Segmente eingeteilt ist, zur Trimmung des Hydraulikzylinders 110 aufweist.

Schließlich zeigt Figur 1 auch noch einen Liftschacht 460, der ausgehend von der Oberseite des Hydraulikzylinders 410 in diesen hineinführt und den Zugang zu oberen und unteren umlaufenden Galerien oder Nuten 470,480, die durch eine Vertiefung in der Innenwand des Hydraulikzylinders 410 gebildet werden und vorzugsweise hoch genug sind, um ein stehendes Arbeiten zu ermöglichen. Sie befinden sich knapp unterhalb der Positionen, an denen die Dichtung 400 zur Verankerung in die Ankerkästen 600,650 eingespannt wird und bilden eine Arbeitsplattform, von der aus dieses Einspannen durchgeführt werden kann.

Unterhalb der unteren Galerie 480 ist optional eine Halterung für Stützrollen vorgesehen.

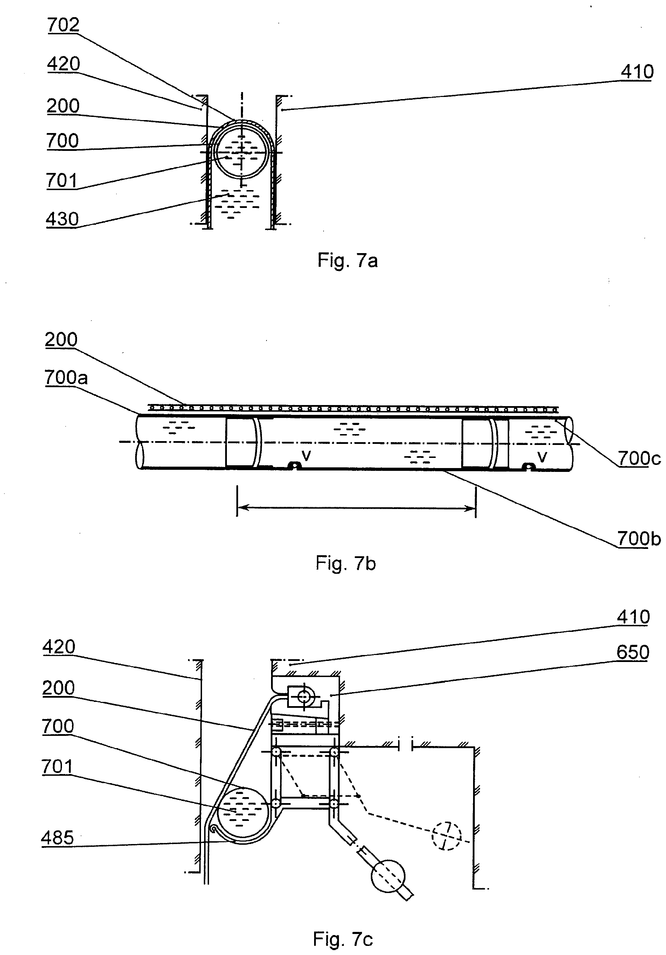

Ein Schlauchtorus 700, dessen Aufbau genauer unten anhand der Figuren 7a bis 7c beschrieben wird, ist oder wird befüllt mit einem Fluid 701, dessen Dichte geringer ist als die Dichte des Hydraulikfluids 430, mit dem der Lageenergiespeicher 100, betrieben wird, so dass er beim Betrieb des Lageenergiespeichers auf dem Hydraulikfluid schwimmt und durch den Auftrieb an der Umschlagstelle 702 der Dichtung 200 gehalten wird, so dass er als eine Hilfsdichtung fungiert.

Schließlich ist in Figur 1 noch in gestrichelter Darstellung die Position des Kolbens 420 bei geladenem Lageenergiespeicher 100 dargestellt.

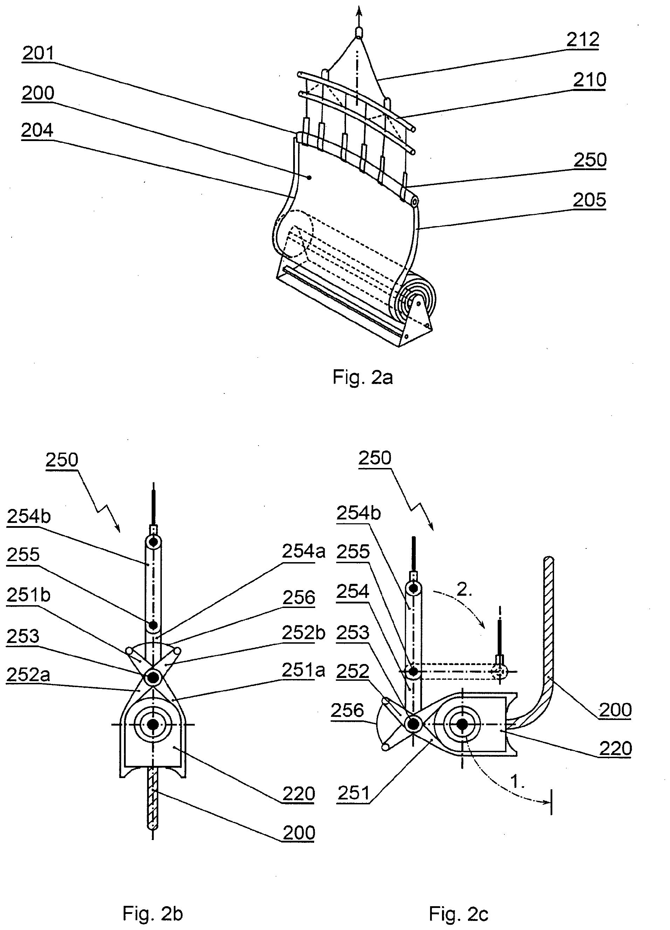

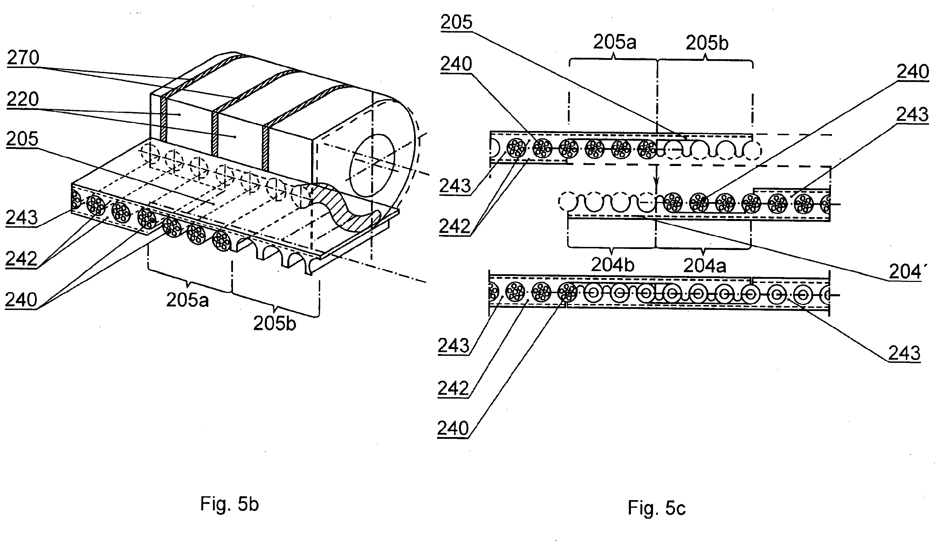

Fig.2a zeigt eine schematische Darstellung des Anhängens einer im vorliegenden Beispiel in aufgerollter Form bereitgestellten Dichtungsbahn 200 an einen in Figur 2a nicht dargestellten Kran 300, also des Schritts e) des erfindungsgemäßen Verfahrens. Dabei ist ein Ende 201 der Dichtungsbahn 200 über Klammern 250, deren bevorzugter Aufbau in Figuren 2b und 2c gezeigt ist, mit einer kreisbogenförmigen Traverse 210 verbunden, die über ein Traggeschirr 212 vom Kran 300 angehoben wird. Ferner erkennt man an den Rändern der Dichtungsbahn 200 einen ersten Verbindungsabschnitt 204 und einen zweiten Verbindungsabschnitt 205, die beispielsweise wie in Figur 5c dargestellt ausgebildet sein können. Mittels dieser Verbindungsabschnitte 204,205 können mehrere Dichtungsbahnen 200 zu einer Gruppe von miteinander verbundenen Dichtungsbahnen und schließlich zur kompletten Dichtung 400 zusammengefügt werden.

Wie die Figuren 2b und 2c zeigen, weist die Klammer 250 einen ersten Schenkel 251 mit einem Arbeitsabschnitt 251a und einen Betätigungsabschnitt 251b und einen zweiten Schenkel 252 mit einem Arbeitsabschnitt 252a und einem Betätigungsabschnitt 252b auf, die über eine Drehachse 253, deren Position die Grenze zwischen den Arbeitsabschnitten 251a, 252a und den Betätigungsabschnitten 252a,252b definiert, miteinander verbunden sind. Die Arbeitsabschnitte 251a,252a sind von ihrer Form her so an die Form der Ankerstücke 220 angepasst, dass sie diese umgreifen. Eine zwischen den Betätigungsabschnitten 251b,252b wirkende Druckfeder 256 presst dabei die Arbeitsabschnitte 251a,252a zusammen.

Ebenfalls um die Drehachse 253 herum um drehbar angeordnet ist ein Tragbügel 254 vorgesehen, an dem die Klammer 250 getragen bzw. befestigt werden kann. Dieser Tragbügel 254 zeichnet sich dadurch aus, dass er einen ersten Teil 254a und einen zweiten Teil 254b aufweist, welches um eine zur Drehachse 253 parallel verlaufende zweite Drehachse 255 drehbar ist. Auf diese Weise wird ermöglicht, dass die Klammer 250 die Ankerstücke 220 in verschiedenen Orientierungen halten kann.

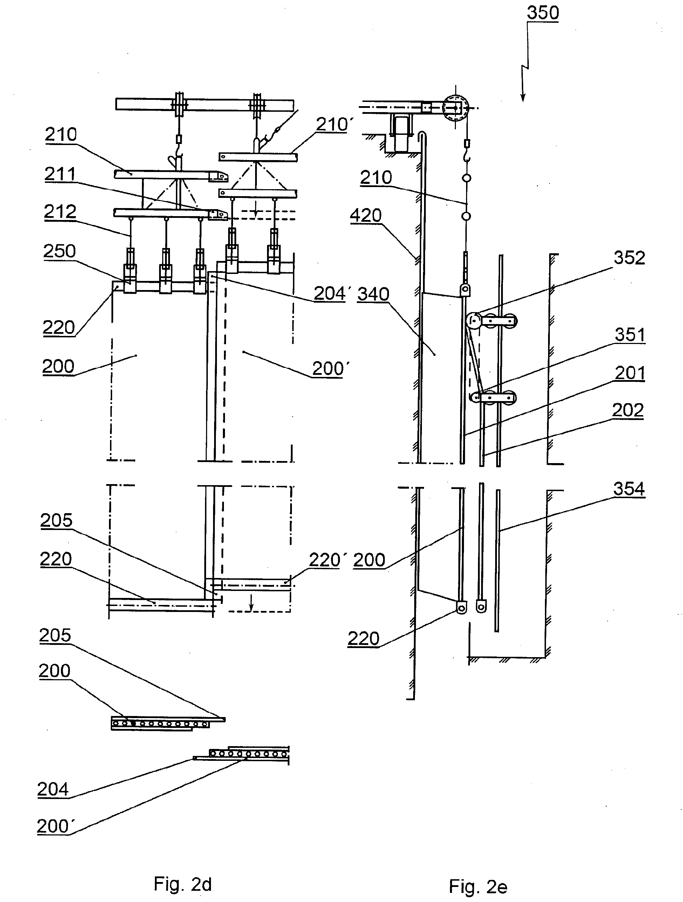

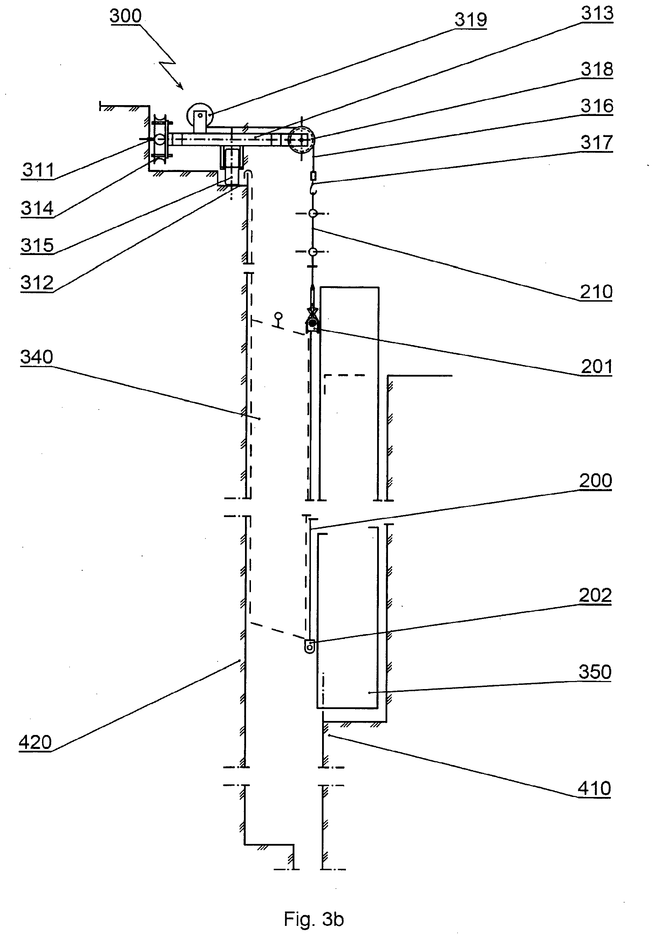

Fig.2d zeigt einen Aspekt des Positioniervorgangs gemäß Schritt f) des erfindungsgemäßen Verfahrens, nämlich die Positionierung von zwei Dichtungsbahnen 200, 200', die jeweils wie oben beschrieben mit Klammern 250,250' an Traversen 210, 210' befestigt sind. Um die Positionierung der Dichtungsbahnen 200,200' zu erleichtern, weisen die Traversen 210,210' Positionierabschnitte 211,211' auf, die miteinander überlappend verbunden werden können, wobei der Überlapp an den Überlapp der Verbindungsabschnitte 205,204' der Dichtungsbahnen 200,200', der im unteren Teil der Figur 2d noch einmal aus anderer Perspektive dargestellt ist, angepasst ist. Die so relativ zueinander positionierten Dichtungsbahnen 200,200' können dann in den Spalt zwischen Hydraulikzylinder 410 und Kolben 420 herabgelassen werden, bis das zweite Ende, an dem die Traversen 210,210' nicht angeordnet sind, ungefähr auf Höhe des oberen Ankerkastens ist. Die Situation nach der Positionierung der Dichtungsbahnen 200,200' relativ zueinander vor dem Herablassen ist auch in Figur 3b noch einmal gezeigt.

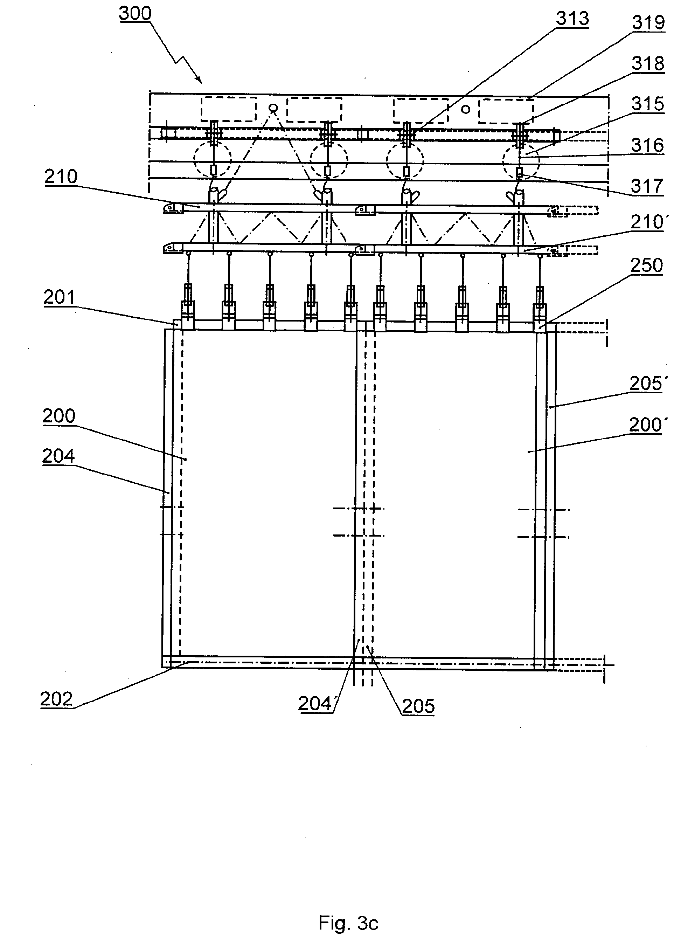

Fig.2e zeigt schematisch eine Möglichkeit, die Verbindung von Dichtungsbahnen 200,200' miteinander herbeizuführen. An mindestens einer Stelle im Randbereich des Hydraulikzylinders 410 wird ein Klebeschlitten 350 vorgesehen, der an einer Führungsschiene 354 entlang läuft. Vom Klebeschlitten 350 werden mit einer ersten Rolle 351 die Stoßfugen zwischen Verbindungsabschnitten 205,204' geöffnet und beleimt, um dann unter dem Druck einer zweiten Rolle 352 verleimt zu werden. Alternativ können die Verbindungsabschnitte 205,204' auch verschweißt werden. Die Position, in der dieser Vorgang bevorzugt abläuft, ist auch in Figur 3c noch einmal dargestellt, in der besonders gut zu erkennen ist, dass in dieser Position eine glatte Oberfläche des Kolbens 420, auf der ein Klebebett 340 angeordnet wird, wenn der Radius des Kolbens 420 in seinem oberen Bereich reduziert ist, als Unterlage für den Verbindungsprozess dienen kann.

Nach dem Verkleben einer Stoßfuge kann dann der Kran 300 auf dem ihn tragenden kreisförmigen Schienensystem 310 weitergefahren werden, um die nächste zu verklebende Stoßfuge zum Klebeschlitten 350 zu transportieren.

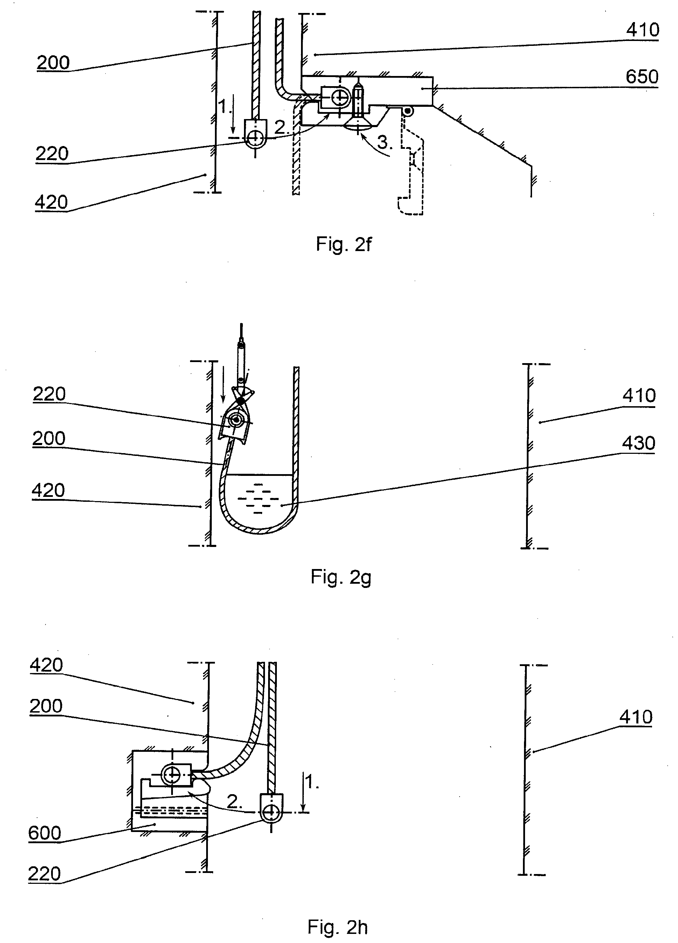

Wie in Fig.2f dargestellt ist, hängt nun die aus den Dichtungsbahnen 200 zusammengefügte Dichtung 400 ungefähr in Höhe des oberen Ankerkastens 650 im Spalt zwischen Kolben 420 und Hydraulikzylinder 410. Es werden nun die Ankerstücke 220 in den Ankerkasten 650 eingespannt, wobei bevorzugt zuvor durch Betätigung des Spannmittels der Dichtungsbahnen 200 der Umfang der Dichtung an den Innenumfang des Hydraulikzylinders 410 angepasst wird. Dies kann von der oberen Galerie bzw. von der oberen Nut 470 aus geschehen, wobei geeignete Werkzeuge, z.B. ein Hebelsystem, das auf einem Geländer der oberen Galerie und an der Wand des Kolbens 420 abgestützt ist, zum Einsatz gebracht werden können. Als Resultat dieses Vorgangs hängt nun die Dichtung 400 mit einem Ende an den Kranhaken 317 des Krans 300 und ist mit dem anderen Ende am oberen Ankerkasten 650 verankert.

Als nächstes muss die Dichtung 400 umgekrempelt werden. Dazu wird das am Kranhaken 317 des Krans 300 hängende Ende der Dichtung 400 weiter abgesenkt. Fig.2g zeigt eine Momentaufnahme während dieses Prozesses, der dem Schritt i) des erfindungsgemäßen Verfahrens entspricht. Um sicherzustellen, dass das Umkrempeln in dem engen Spalt funktioniert, kann im Bereich des Knicks der Dichtung eine Beschwerung mit Hydraulikflüssigkeit 430 als Ballast erfolgen.

Schließlich muss die Dichtung 400 abgehängt und im unteren Ankerkasten 600 verankert werden, wie dies in Fig.2h schematisch dargestellt wird. Das Abhängen kann dadurch erfolgen, dass von der unteren Galerie 480 aus mit Hilfe geeigneter Werkzeuge, beispielsweise eines an der Außenwand des Kolbens 120 angeordneten Hebelsystems die Betätigungsabschnitte 251b,252b der Klammer 250 betätigt werden. Anschließend wird mit geeigneten Werkzeugen -wobei beispielsweise das Hebelsystem auch hierfür verwendet werden kann- das Ankerstück 220 in den unteren Ankerkasten 600 eingespannt.

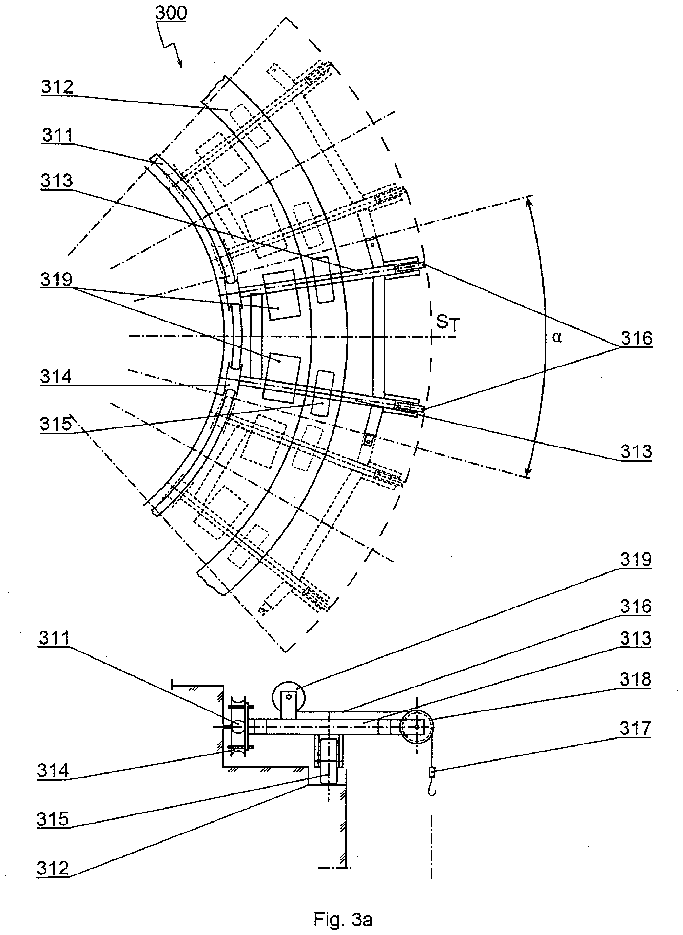

Fig.3a zeigt eine Teildarstellung der Aufsicht auf ein Beispiel für einen gemäß Schritt b) bereitzustellenden Kran 300, der auf dem Kolben 420 angeordnet ist. Der Kran 300 besitzt ein kreisförmiges Schienensystem 310 mit innerer Schiene 311 und äußerer Schiene 312. Auf dem Schienensystem sind mehrere Ausleger 313 geführt, die, wie in den Figuren 3b und 3c zu erkennen ist, mittels angetriebener Rollen 314,315 unabhängig voneinander verfahrbar sind. Jeder Ausleger 313 trägt eine Winde 319, mit der ein Tragseil 316 auf- und abgespult werden kann. An dem Tragseil 316 ist jeweils ein der Kranhaken 317 angeordnet ist, über eine Umlenkrolle 318 angehoben und abgesenkt werden kann.

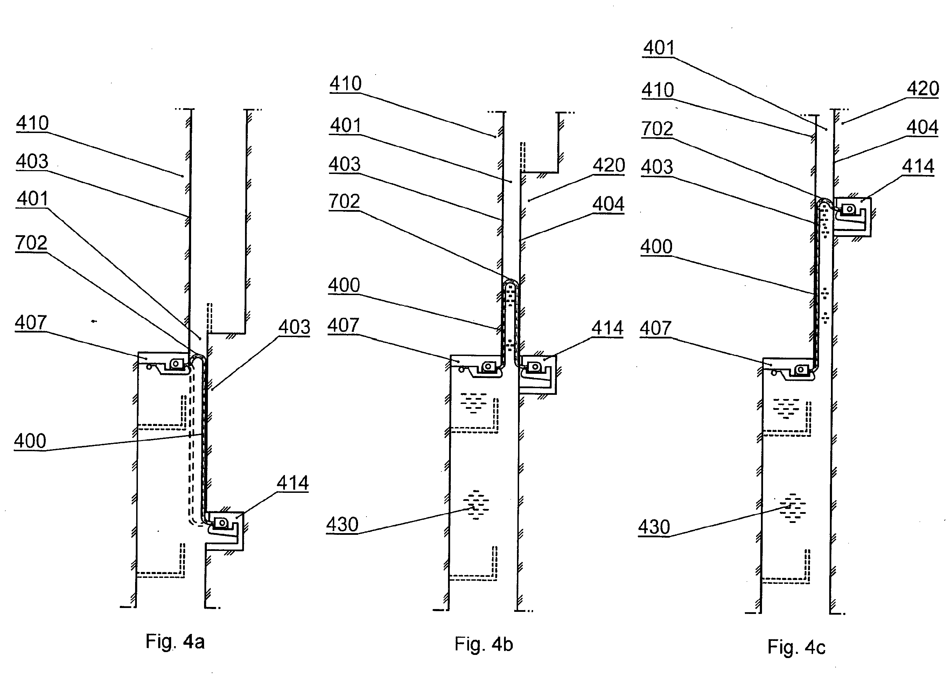

Figur 4a zeigt eine Dichtungsanordnung bestehend aus einer Dichtung 400, die als Rollmembran ausgeführt ist, im Querschnitt. Bei der Dichtung 400, die einen Spalt 401 der Spaltbreite b zwischen Innenwand 403 des Hydraulikzylinders 410 und der dieser zugewandten Außenwand 404 des Kolbens 420 abdichtet, wird der Dichtabschnitt von der gesamten Dichtung 400 gebildet. Mit anderen Worten ist die Dichtung 400 über ihre gesamte Länge, wobei die Länge durch den maximalen Abstand der Enden der Dichtung 400 definiert ist, mit einer auf die, z.B. durch Stahlseile gebildete, Trägerstruktur aufgebrachten fluiddichten Schicht gegen den Durchtritt von Hydraulikflüssigkeit 430 abgedichtet. Die Länge der Dichtung 400 sollte die Hälfte der maximalen Hubhöhe h des Lageenergiespeichers übersteigen, und zwar bevorzugt um einige Prozent. Beispielsweise kann eine Länge der Dichtung von 0,52*h verwendet werden. Dieser Längenüberschuss ist nicht nur nötig, um einen eventuellen Querversatz des Kolbens 420 im Hydraulikzylinder durch Winddruck kompensieren zu können, sondern erlaubt auch, wie unten erläutert wird, eine Anpassung der Form der Dichtung 400 an den herrschenden Druck der Hydraulikflüssigkeit, die für die Definition der Richtung der wirkenden Kräfte vorteilhaft ist.

Die Dichtung 400 ist mit einem Ende im Ankerkasten 407, der, da die Installation der Dichtung 400 bei vollständig entladenem Lageenergiespeicher erfolgt, dem oberen Ankerkasten 650 entspricht, eingespannt. Das andere Ende der Dichtung 400 ist im Ankerkasten 414, der dem unteren Ankerkasten 600 entspricht, eingespannt.

Die Figuren 4a bis 4c zeigen schematisch die Lage der Dichtung 400 bei unterschiedlichen Hubhöhen des Kolbens 405 relativ zum Hydraulikzylinder 410, was mit unterschiedlichen Ladezuständen des Lageenergiespeichers korrespondiert, anhand eines Ausschnitts aus einer Querschnittsdarstellung des Lageenergiespeichers, der eine Innenwand 403 des Hydraulikzylinders, den Spalt b und die Außenwand 404 des Kolbens 420 zeigt.

Bei völlig abgesenktem Kolben 420, wie in Figur 4a dargestellt, wird die Dichtung 400 fast vollständig durch den Druck der Hydraulikflüssigkeit 430 an die Außenwand 404 des Kolbens 420 gepresst. Da die Länge der Dichtung 400 größer ist als die Entfernung zwischen den beiden Ankerkästen 407, 414 wird ein Abschnitt der Dichtung 400 durch den Druck der Hydraulikflüssigkeit 430 ein kleines Stück über den höher angeordneten der Ankerkästen 407 hinaus angehoben und dann in einem Bogen zu dem Ankerkasten 414 zurückgeführt. Dieser Bogen, der dem Bereich entspricht, an der die Dichtung 400 ihre Verlaufsrichtung von nach oben zu nach unten ändert, definiert auch die unten näher erläuterte Umschlagstelle 702 der Rollmembrandichtung.

Bei halb angehobenem Kolben 420, wie in Figur 4b dargestellt, befinden sich beide Ankerkästen 407,414 auf gleicher Höhe, so dass die Dichtung 400 fast vollständig frei beweglich ist und somit durch den Druck der Hydraulikflüssigkeit 430 an die Innenwand 403 des Hydraulikzylinders und die Außenwand 404 des Kolbens 405 gepresst, wobei diese Abschnitte über eine bogenförmige Verbindung ineinander über gehen.

Bei völlig angehobenem Kolben 420, wie in Figur 4c dargestellt, wird die Dichtung 400 fast vollständig durch den Druck der Hydraulikflüssigkeit 430 an die Innenwand 403 des Hydraulikzylinders 410 gepresst. Da die Länge der Dichtung 400 größer ist als die Entfernung zwischen den beiden Ankerkästen 407, 414, wird ein Abschnitt der Dichtung 400 durch den Druck der Hydraulikflüssigkeit 430 ein kleines Stück über den höher angeordneten der Ankerkästen 414 hinaus angehoben und dann in einem Bogen zu dem höher angeordneten Ankerkasten 414 zurückgeführt.

Bei Betrachtung der Figuren 4a bis 4c wird insbesondere klar, dass die auftretenden Kräfte hauptsächlich parallel zur Hubrichtung wirken und von der Spaltbreite b abhängig sind. Zugleich wird deutlich, dass mit diesem Dichtungsaufbau eine Veränderung der Spaltbreite b des Spalts 401, wie sie z.B. als Folge von Winddruck auftreten kann, problemlos beherrschbar ist.

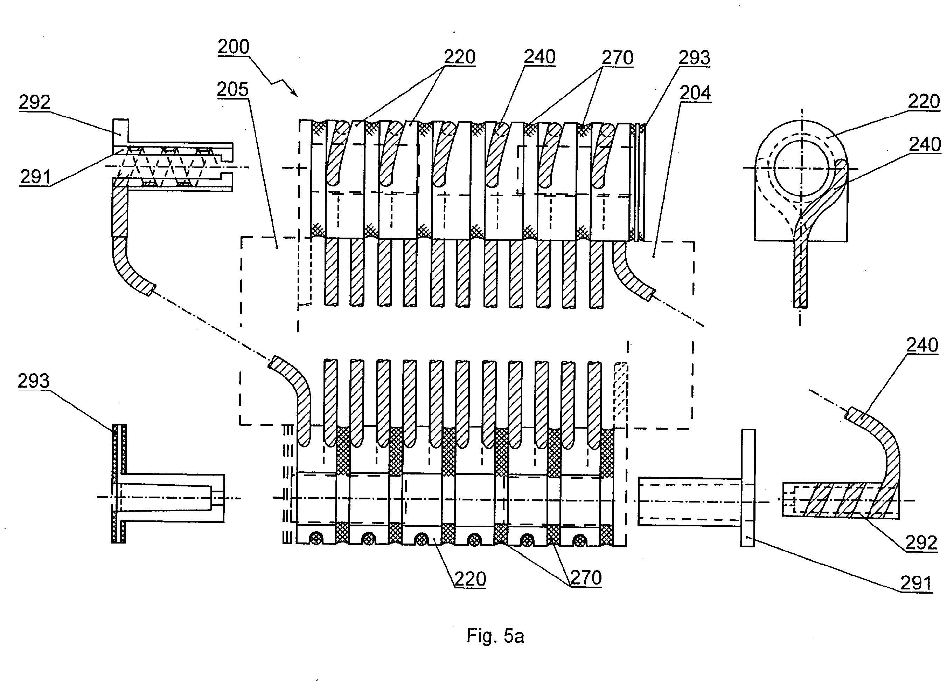

Fig.5a zeigt in einer partiellen Explosionsdarstellung eine Ansicht der Trägerstruktur einer erfindungsgemäßen Dichtungsbahn 200, die an beiden Enden 201, 202 in ihrer Längsrichtung durch Reihen von Ankerstücken 220, zwischen denen jeweils elastische Elemente 270 angeordnet sind, begrenzt wird. Die Länge der Dichtbahn 200 entspricht somit dem Abstand zwischen zwei an unterschiedlichen Enden 201,202 der Dichtbahn 200 angeordneten, einander gegenüberliegenden Ankerstücken 240. Ihre Querrichtung, in der die Breite der Dichtbahn 200 definiert wird, ist dementsprechend die senkrecht zur Längsrichtung stehende Richtung, in der an demselben Ende 201,202 der Dichtbahn 200 befindliche Ankerstücke 220 nebeneinander angeordnet sind. Die Dicke der Dichtbahn ist in der Richtung zu messen, die senkrecht zu Längs- und Querrichtung erfolgt. Als Oberflächen der Dichtungsbahn 200 werden die durch die Längs- und Querseiten definierten Flächen bezeichnet.

Wie man erkennt, ist ein Stahlseil 240 in Seilführungsnuten 228 der Ankerstücke 220 um diese herumgeschlungen und bildet so die Trägerstruktur der Dichtungsbahn 200. Damit die Dichtungsbahn 200 eine Dichtwirkung entfalten kann, muss eine fluiddichte (Ober-)Fläche bzw. fluiddichte Schicht 243 vorhanden sein, die den Durchtritt des Fluids durch die Trägerstruktur verhindert. Diese fluiddichte Oberfläche oder Schicht kann auf unterschiedliche Arten auf oder an der Trägerstruktur erzeigt werden. Beispielsweise können die einzelnen, im Wesentlichen parallel zueinander verlaufenden Abschnitte des Stahlseils 240 mit einem fluiddichten Gewebe 242 verbunden, z.B. überklebt werden. Alternativ oder zusätzlich kann die fluiddichte Fläche auch dadurch erzeugt werden, dass die Trägerstruktur mit einem flüssigen Material bedeckt oder durchtränkt wird, das danach erstarrt und die fluiddichte Fläche 241 bzw. Schicht bildet. Als Materialien kommen hierbei beispielsweise Kautschuk, Gummi oder Kunststoffe in Frage.

Ein konkretes Beispiel für einen möglichen Aufbau der Dichtungsbahn 200 zeigt die Ausschnittsdarstellung der Figur 5b. Die Abschnitte des Stahlseils 240 sind in eine fluiddichte Schicht 243, die aus Gummi besteht, eingebettet und beidseitig mit Gewebe 242 beklebt. In dieser Darstellung erkennt man auch, dass die Dichtungsbahn 200 an ihrer einen Längsseite einen Verbindungsabschnitt 205 aufweist, in dem Gewebe und/oder fluiddichte Schicht dünner ausgeführt sind. Konkret ist ein erster Teilabschnitt 205a vorhanden, in dem die Einbettung der Abschnitte des Stahlseils 240 in die fluiddichte Schicht 243 und das Gewebe 242 an der einen Seite nicht vorhanden sind und ein zweiter Teilabschnitt 205b vorhanden, in dem an der einen Seite das Gewebe 242 nicht vorhanden ist und keine Trägerstruktur vorgesehen ist, während in diesem Abschnitt aber die fluiddichte Schicht 243 mit Ausnehmungen zur Aufnahme von Abschnitten eines Stahlseils 240 ausgebildet ist, so dass in dem Teilabschnitt 205b zumindest die fluiddichte Schicht und/ oder das Gewebe die flexible Trägerstruktur nach außen hin auf der Seite einer Oberfläche überragt.

Fig.5c ist eine schematische Darstellung des Herstellens einer Verbindung zwischen einem ersten Verbindungsabschnitt 205 einer Dichtungsbahn 200 und einem zweiten Verbindungsabschnitt 204' einer weiteren Dichtungsbahn 200', wobei die Verbindungsabschnitte 205, 204' jeweils wie anhand der Figur 5b beschrieben wurde aufgebaut sind, sich aber hinsichtlich der Oberfläche, an der das Gewebe 242 und die fluiddichte Schicht 243 aus Gummi weggelassen sind, unterscheiden. Dementsprechend ist es möglich, den ersten Verbindungsabschnitt 205 und den zweiten Verbindungsabschnitt 204' überlappend anzuordnen, in Überlapp miteinander zu bringen und zu verkleben.

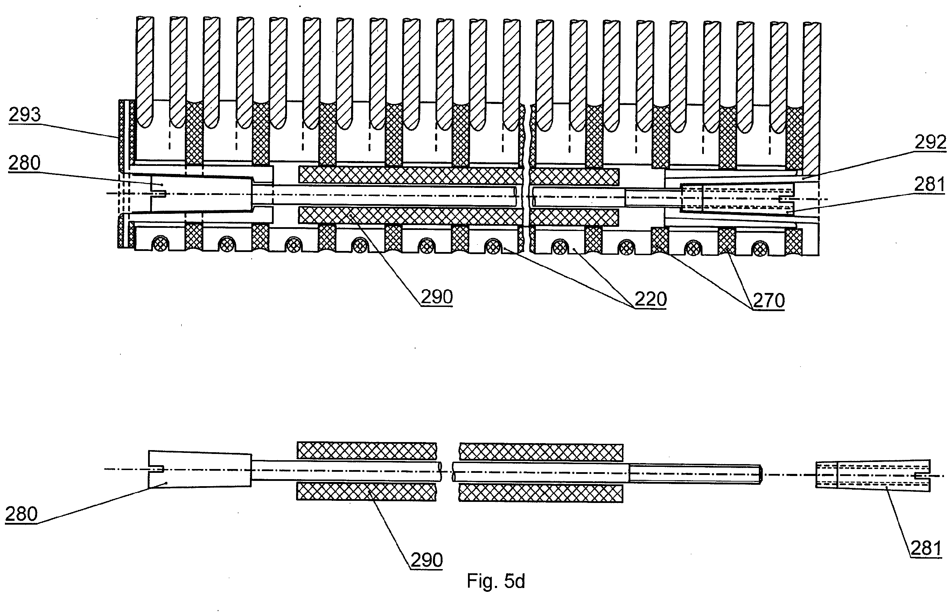

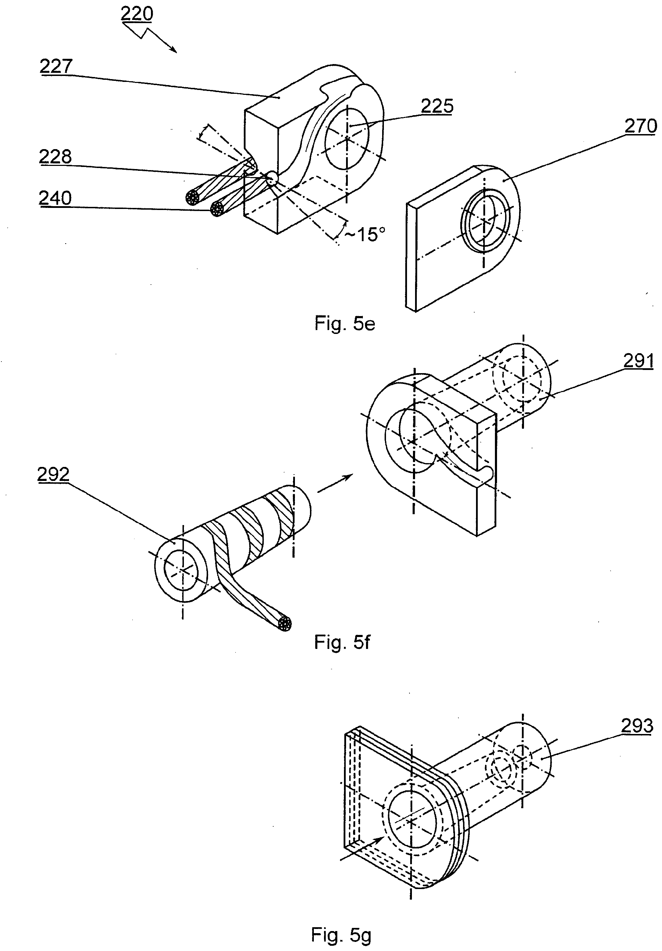

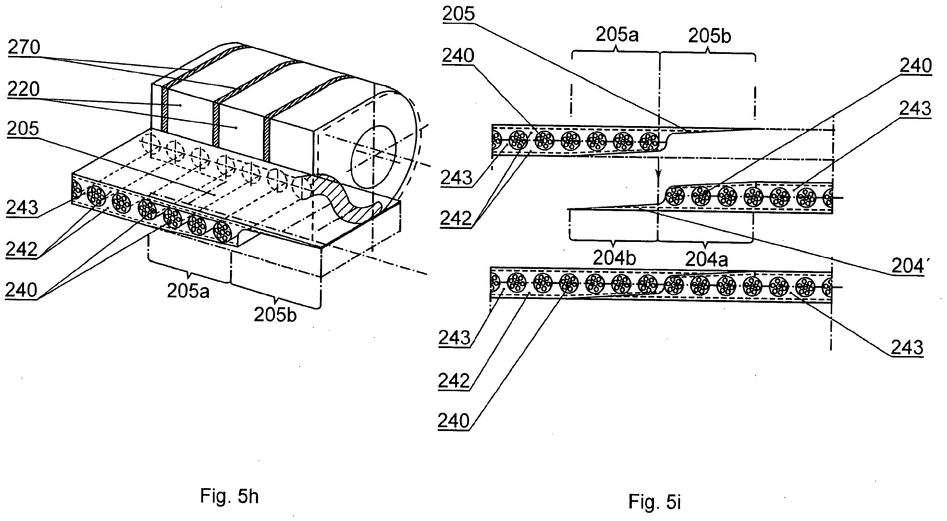

Eine zu den Figuren 5b und 5c alternative Lösung zeigen die Figuren 5h und 5i. Der Unterschied besteht im Aufbau der Verbindungsabschnitte. Im ersten Teilabschnitt 205a ist die Einbettung der Abschnitte des Stahlseils 240 in die fluiddichte Schicht 243 nach außen hin zunehmend geschwächt und das Gewebe 242 an der einen Seite nicht vorhanden. Im zweiten Teilabschnitt 205b vorhanden, ist an der einen Seite das Gewebe 242 nicht vorhanden ist und keine Trägerstruktur mehr vorgesehen, so dass in dem Teilabschnitt 205b zumindest die fluiddichte Schicht und/ oder das Gewebe die flexible Trägerstruktur nach außen hin auf der Seite einer Oberfläche überragt. Figur 5 i zeigt, wie derart aufgebaute Verbindungsabschnitte benachbrter Dichtungsbahnen zusammengefügt werden.

Fig.5d zeigt den Aufbau eines Endabschnitts einer erfindungsgemäßen Dichtungsbahn 200. Man erkenn eine Abfolge von Ankerstücken 200, zwischen denen jeweils elastische Elemente 270 angeordnet sind, wobei Ankerstücke 220 und elastische Elemente 270 jeweils zentrale Öffnungen 225, 275 aufweisen, durch die hindurch eine Spannschraube 280 mit Spannmutter 281 geschoben ist. Der Mittelabschnitt der Spannschraube 280 ist in einem Gummirohr 290 geführt, was dazu führt, dass das Spannmittel flexibel genug ist, um eine Krümmung des durch Ankerstücke 200 und elastische Elemente 270 gebildeten Ankerbarrens zu ermöglichen. Durch Anziehen bzw. Lockern der Spannschraube 280 lässt sich bei dieser Anordnung dann die Abstände zwischen benachbarten Ankerstücken 220 und somit die Länge des gesamten Ankerbarrens beeinflussen. Zur Druckübertragung dienen dabei insbesondere die in Figur 5f gezeigte Endscheibe 291 mit Seilverankerung 292 und die in Figur 5g gezeigte Endscheiben 293 ohne Seilverankerung.

Fig.5e zeigt ein einzelnes Ankerstück 220 mit Schmalseite 227, Seilführungsnut 228 und zentraler Öffnung 225.

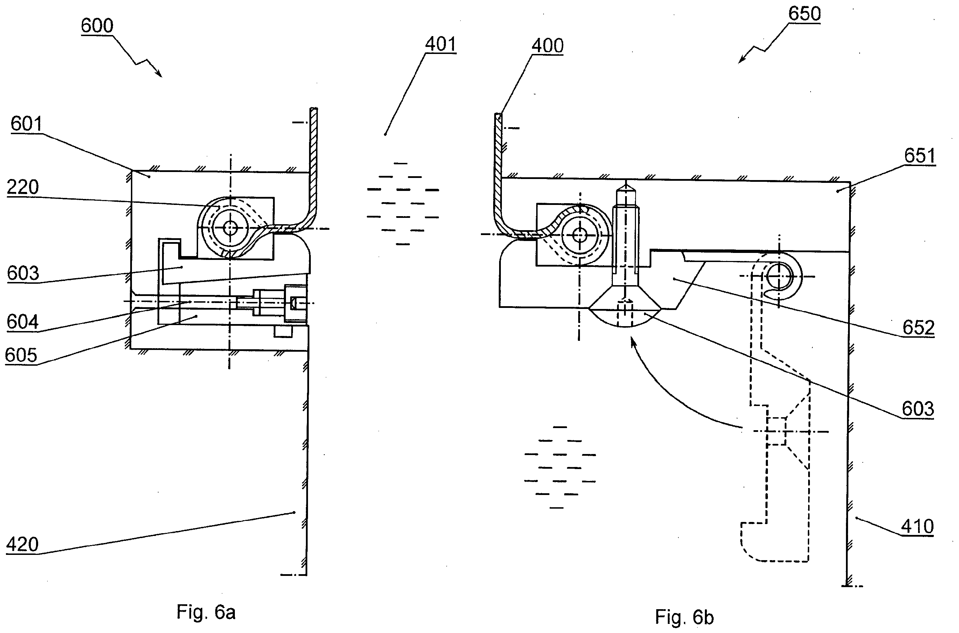

Fig.6a zeigt eine erste Ausgestaltung eines Ankerkastens, nämlich des kolbenseitig angeordneten unteren Ankerkastens 600, der in einer Nut 425 im Kolben 420 gegenüber der unteren Galerie bzw. der im Hydraulikzylinder 410 vorgesehenen unteren Nut 480 angeordnet ist. In die Nut 480 ist ein Profil, bevorzugt Stahlprofil, 601 eingespritzt, dessen nach unten gerichtete obere Oberfläche an die Außenkontur der Schmalseite des Ankerstücks 220 angepasst ist. Nachdem das Ankerstück 220 eingesetzt ist, wird ein an die noch ungeführten Abschnitte der Außenkontur der Schmalseite des Ankerstücks 220 eine Ankerklammer 603 angesetzt und mit einer Spannschraube 604 mit Keil 605 verspannt.

Fig.6b zeigt eine zweite Ausgestaltung eines Ankerkastens, nämlich des in der Innenwand des Hydraulikzylinders 410, angeordneten oberen Ankerkastens 650. Dieser ist an der Oberseite der oberen Galerie bzw. der oberen Nut 470 angeordnet und weise ein an diese Oberseite eingesetztes Profil, bevorzugt Stahlprofil, 651 auf, dessen nach unten gerichtete Oberfläche an die Außenkontur der Schmalseite des Ankerstücks 220 angepasst ist. Nachdem das Ankerstück 220 eingesetzt ist, wird ein klappbar daran angeordnetes Verschlusselement 652 zugeklappt, so dass seine an die noch ungeführten Abschnitte der Außenkontur der Schmalseite des Ankerstücks 220 angepasste Kontaktfläche in Kontakt mit dem Ankerstück gebracht wird. Durch Verschrauben mit der Spannschraube 653 erfolgt dann das Verspannen.

Fig.7a zeigt eine vergrößerte Querschnittsansicht der Umschlagstelle 702 der Dichtung 400 in einer optionalen Anordnung mit einer Hilfsdichtung in Form eines Schlauchtorus 700, der mit einem Fluid 701 befüllt ist, das eine geringere Dichte als das Hydraulikfluid 430 aufweist. Dementsprechend schwimmt die durch den Schlauchtorus 700 gebildete Hilfsdichtung auf dem Hydraulikfluid 430 und wird durch die resultierenden Auftriebskräfte an die Umschlagstelle 702 angedrückt. Der Zweck der Hilfsdichtung besteht dabei insbesondere darin, zu verhindern, dass bei einem Leck in der Dichtung 400 ein unkontrollierter "Absturz" des Kolbens 420 erfolgt. Kritisch wirkt sich das Leck dann aus, wenn es an der Umschlagstelle 702 vorliegt, denn dort ist -im Gegensatz zu anderen Stellen, an denen die Dichtung 400 an die Wand des Kolbens 420 oder des Hydraulikzylinders gepresst wird- ein freies Austreten der Hydraulikflüssigkeit möglich, wenn die Hilfsdichtung nicht vorhanden ist. Der auf der Hydraulikflüssigkeit 430 schwimmende, durch den Auftrieb an die Umschlagstelle 702 angedrückte Schlauchtorus 700 blockiert den direkten Austritt des Hydraulikfluids 430 und somit die allzu schnelle Entladung.

Um den Schlauchtorus 700, dessen Umfang an den Umfang von Kolben 420 und Hydraulikzylinder 410 angepasst und somit mehrere hundert m lang sein kann installieren zu können, empfiehlt es sich, ihn in miteinander verbindbare Einzelsegmente 700a, 700b, 700c zu zerlegen, wie dies in Figur 7b gezeigt ist. Diese können, wie in Figur 7c dargestellt, dann über eine der Galerien 470,480 in den Spalt eingebracht, auf einer Halterung 485 abgelegt und dann über ein Ventil v mit dem Fluid 701 befüllt werden. Beim Auffüllen des Hydraulikfluids 430 schwimmt er dann auf und ordnet sich an der Umschlagstelle 702 an.

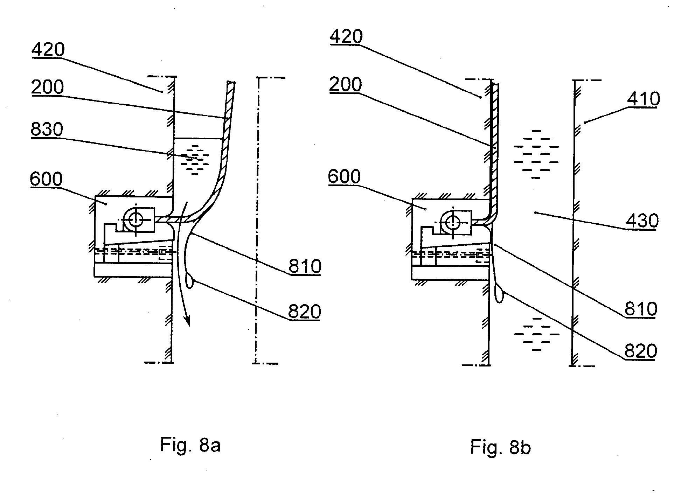

Fig.8a zeigt eine optionale Gestaltung eines Endabschnitts der Dichtung 400 bzw. der Dichtungsbahnen 200 vor vollständiger Befüllung des Spalts mit Hydraulikfluid 430. Bei dieser Gestaltung ist vorgesehen, dass die Fluiddichtigkeit der Dichtungsbahn im Bereich, der sich am unteren Ankerkasten befindet, durch einen lose an der Unterseite der Trägerstruktur der Dichtungsbahn 200, wenn sie in diese Position gebracht ist, anliegenden Dichtungsstreifen 810 realisiert wird, an dessen Ende eine Öse 820 vorgesehen ist. Als Konsequenz aus der losen Anordnung des Dichtungsstreifens 810 an der Trägerstruktur ist es auf einfache Weise möglich, bei entladenem Lageenergiespeicher 100 durch Ablassen des Hydraulikfluids 430 Sickerwasser 830 oder Gegendruckflüssigkeit, das bzw. die auf die falsche Seite der Rollmembran gelangt ist, ablaufen zu lassen. Befindet sich hingegen, wie in Figur 8b dargestellt, Hydraulikfluid 430 im Spalt, so wird der Dichtungsstreifen 810 durch den Druck an die Trägerstruktur angepresst und entfaltet somit seine Dichtwirkung. Die Öse 820 erlaubt es dabei in Abhängigkeit vom Eigengewicht der Dichtungsbahn 200 gegebenenfalls, zum Ablassen der Dichtungsbahn 200 statt der Klammern 250 die Ösen 820 zu verwenden.

### Bezugszeichenliste

- 100: Lageenergiespeicher

- 200, 200': Dichtungsbahn
- 201, 202: Ende
- 204, 204', 205, 205': Verbindungsabschnitt
- 204a, 204b: Teilabschnitt
- 205a, 205b: Teilabschnitt
- 210, 210': Traverse
- 211, 211': Positionierabschnitt
- 212: Traggeschirr
- 220: Ankerstück
- 225, 275: zentrale Öffnung
- 227: Schmalseite
- 228: Seilführungsnut
- 240: Stahlseil
- 242: Gewebe
- 243: fluiddichte Schicht
- 250, 250': Klammer
- 251: erster Schenkel
- 252: zweiter Schenkel
- 251a, 252a: Arbeitsabschnitt
- 251b, 252b: Betätigungsabschnitt
- 253: Drehachse
- 254: Tragbügel
- 254a: erster Teil
- 254b: zweiter Teil
- 255: zweite Drehachse
- 256: Druckfeder
- 270: elastisches Element
- 280: Spannschraube
- 281: Spannmutter
- 290: Gummirohr
- 291: Endscheibe
- 292: Seilverankerung
- 293: Endscheibe

- 300: Kran
- 310: kreisförmiges Schienensystem
- 311: innere Schiene
- 312: äußere Schiene
- 313: Ausleger
- 314, 315: angetriebene Rolle
- 316: Tragseil
- 317: Kranhaken
- 318: Umlenkrolle
- 319: Winde

- 340: Klebebett
- 350: Klebeschlitten
- 351: erste Rolle
- 352: zweite Rolle
- 354: Führungsschiene für Klebeschlitten

- 400: Dichtung
- 401: Spalt
- 403: Innenwand
- 404: Außenwand
- 407, 414: Ankerkasten
- 410: Hydraulikzylinder
- 411: Lagerblock
- 420: Kolben
- 421: Öffnung
- 425: Nut
- 430: Hydraulikflüssigkeit
- 431: Vorratsreservoir
- 440: Transport-, Versorgungs- und Turbinenschacht
- 441: Versorgungsleitung
- 450: Betonring
- 460: Liftschacht
- 461: Tank
- 470: obere Galerie/Nut
- 480: untere Galerie/Nut
- 485: Halterung

- 600: unterer Ankerkasten
- 601: Profil, bevorzugt Stahlprofil,
- 603: Ankerklammer
- 604: Spannschraube
- 605: Keil
- 650: oberer Ankerkasten
- 651: Profil, bevorzugt Stahlprofil,
- 652: Verschlusselement
- 653: Spannschraube

- 700: Schlauchtorus
- 700a, 700b, 700c: Einzelsegmente
- 701: Fluid
- 702: Umschlagstelle

- 810: Dichtungs-Streifen
- 820: Öse
- 830: Sickerwasser

- P: Pumpe
- T: Tubine
- G: Generator
- V: Ventil/Schleuse
- b: Spaltbreite

## Patentansprüche

1. Verfahren zur Montage einer Dichtung (400) aus Dichtungsbahnen (200) an einem Lageenergiespeicher (100) mit einem Hydraulikzylinder (410), in dem ein Kolben (420) zur Speicherung von Energie in Form von potentieller Energie des Kolbens (420) angeordnet ist, wobei die Position des Kolbens (420) relativ zur Erdoberfläche veränderbar ist, mit einer Pumpe (P), mit der eine Hydraulikflüssigkeit (430) über Leitungen in den Hydraulikzylinder (410) pumpbar ist, so dass der Kolben (420) angehoben wird, und mit einem Generator (G) zur Umwandlung von Strömungsenergie von beim Absinken des Kolbens (420) aus dem Hydraulikzylinder (410) verdrängter Hydraulikflüssigkeit (430) in Elektrizität, wobei die Dichtung (400) zwischen dem Hydraulikzylinder (410) und dem Kolben (420) angeordnet ist mit den Schritten:
a) Bereitstellen von Dichtungsbahnen (200) oder Gruppen von miteinander verbundenen Dichtungsbahnen (200),
b) Bereitstellen eines Krans (300) auf der Oberseite des Kolbens (420) oder am oberen Rand des Hubzylinders,
c) Bereitstellen eines oberen Ankerkastens (650)
d) Bereitstellen eines unteren Ankerkastens (600)
e) Anhängen der Dichtungsbahnen (200) oder der miteinander verbundenen Gruppen von Dichtungsbahnen (200) an den Kran (300),
f) Positionieren der Dichtungsbahnen (200) oder der Gruppen von miteinander verbundenen Dichtungsbahnen (200), mit dem Kran (300), so dass das frei hängende Ende der Dichtungsbahnen (200) oder der Dichtung (400) sich ungefähr auf der Höhe des oberen Ankerkastens (650) befindet,
g) Verbinden der Dichtungsbahnen (200) oder der Gruppen von miteinander verbundenen Dichtungsbahnen (200) miteinander, so dass eine Dichtung (400) entsteht
h) Einspannen der frei hängenden Enden der Dichtungsbahnen (200) oder der Gruppen von miteinander verbundenen Dichtungsbahnen (200) oder der Dichtung (400) in den oberen Ankerkasten (650),
i) Weiteres Verfahren der Dichtungsbahnen (200) oder der Gruppen von miteinander verbundenen Dichtungsbahnen (200) oder der Dichtung (400) mit dem Kran (300) in den Spalt (401) zwischen Kolben (420) und Hydraulikzylinder (410), so dass das Ende der Dichtungsbahnen (200) oder der Gruppen von miteinander verbundenen Dichtungsbahnen (200) oder der Dichtung (400), an dem der Kran (300) angreift, etwa auf die Höhe des unteren Ankerkastens (600) gebracht wird,
j) Lösen der Verbindung zum Kran (300), und
k) Einspannen des sich auf Höhe des unteren Ankerkastens (600) befindlichen Endes der Dichtungsbahnen (200) oder der Gruppen von miteinander verbundenen Dichtungsbahnen (200) oder der Dichtung (400) in den unteren Ankerkasten (600).

2. Verfahren nach Anspruch 1,
**dadurch gekennzeichnet, dass**
im Schritt b) ein Kran (300) bereitgestellt wird, der für jede Dichtungsbahn (200) oder für jede Gruppe von miteinander verbundenen Dichtungsbahnen (200) mindestens eine Winde (319) aufweist, wobei die Winden (319) auf einem Kreisbogen verfahrbar sind.

3. Verfahren nach Anspruch 1 oder 2,
**dadurch gekennzeichnet, dass**
im Schritt c) der obere Ankerkasten (650) und im Schritt e) der untere Ankerkasten (600) bereitgestellt werden, indem in die Außenwand des Kolbens (420) oder in die Innenwand des Hydraulikzylinders (410) umlaufend eine Nut oder Ausnehmungen eingebracht werden, in denen ein Profil (601,651) angeordnet wird, das lokal an die Außenkontur einer Schmalseite (227) von Ankerstücken (220) angepasst ist und indem ein Fixiermittel zum Fixieren der Ankerstücke (220) im Ankerkasten in der Ausnehmung oder am Profil (601,651) bereitgestellt wird.

4. Verfahren nach einem der Ansprüche 1 bis 3,
**dadurch gekennzeichnet, dass**
im Schritt e) das Anhängen an den Kran (300) über eine kreisbogenförmige Montage-Traverse (210) erfolgt, an der die Dichtungsbahn (200) oder die Gruppe von miteinander verbundenen Dichtungsbahnen (200) befestigt sind.

5. Verfahren nach einem der Ansprüche 1 bis 4,
**dadurch gekennzeichnet, dass**
im Schritt e) das Anhängen an den Kran (300) unter Verwendung mechanisch zu öffnender Klammern (250), die an Ankerstücken (220) der Dichtungsbahn oder der Gruppe von miteinander verbundenen Dichtungsbahnen (220) angreifen, erfolgt.

6. Verfahren nach einem der Ansprüche 1 bis 5,
**dadurch gekennzeichnet, dass** vor dem Einspannen in den Schritten h) und k) in oder an den Dichtungsbahnen (200) angeordnete Spannmittel eingesetzt werden, um die Breite des jeweils einzuspannenden Endes der Dichtungsbahn (200) an den Innenradius des Hydraulikzylinders (410) bzw. den Außenradius des Kolbens (420) anzupassen.

7. Verfahren nach einem der Ansprüche 1 bis 6,
**dadurch gekennzeichnet, dass**
vor der Durchführung des Schritts k) die Außenwand des Kolbens (420) und/oder die dieser zugewandte Seite der Dichtungsbahn (200) oder der Dichtung (400) mit einem Schmiermittel besprüht wird.

8. Verfahren nach einem der Ansprüche 1 bis 7,
**dadurch gekennzeichnet, dass**
im Bereich unterhalb des unteren Ankerkastens (600) ein mehrteiliger oder einteiliger Schlauchtorus (700), mit einem Innendurchmesser des Schlauchs, der der mittleren Breite des Spaltes zwischen Außenwand des Kolbens (420) und Innenwand des Hydraulikzylinders (410) entspricht, bereitgestellt und mit einem Fluid, dessen Dichte geringer als die Dichte des zum Betrieb des Lageenergiespeichers (100) verwendeten Hydraulikfluids (430) ist, befüllt wird.

9. Verfahren nach einem der Ansprüche 1 bis 8,
**dadurch gekennzeichnet, dass**
der Radius des Kolbens (420) in einem Abschnitt zwischen der Oberseite des Kolbens (420) und dem oberen Ankerkasten (650) reduziert wird.

10. Verfahren nach einem der Ansprüche 1 bis 9,
**dadurch gekennzeichnet, dass**
die Schritt h) bis k) in der angegebenen Reihenfolge ausgeführt werden, wobei die Dichtungsbahn (200) oder die Gruppe von miteinander verbundenen Dichtungsbahnen (200) oder die Dichtung (400) während des Schritts i) mit einem Ballastmittel belastet wird.

11. Dichtungsbahn (200) zur Herstellung einer Dichtung (400) für einen Lageenergiespeicher (100) mit einem Verfahren nach einem der Ansprüche 1 bis 10, wobei die Dichtungsbahn (200) eine Trägerstruktur aus nebeneinander angeordneten Stahlseilen (240) oder nebeneinander angeordneten Abschnitten eines oder mehrerer Stahlseile (240) aufweist und bei der zumindest Teile der Ebene, in der die Stahlseile (240) liegen, oder zumindest Teile einer dazu parallel verlaufenden Ebene eine fluiddichte Fläche (241) oder Schicht bilden,
**dadurch gekennzeichne**t, dass
die Stahlseile (240) an den Enden der Dichtungsbahn (200) jeweils an einem Ankerstück (220) zum Verankern der Dichtungsbahn (200) befestigt oder um das Ankerstück (220) herumgeführt sind und dass zwischen jeweils zwei Ankerstücken (220) jeweils ein elastisches Element (270) angeordnet ist.

12. Dichtungsbahn (200) nach Anspruch 11,
**dadurch gekennzeichnet, dass**
die Ankerstücke (220) und die elastischen Elemente (270) jeweils eine Öffnung (225,275) aufweisen, durch die ein flexibles Spannmittel geführt ist, so dass der Abstand zwischen zwei Ankerstücken(220) durch Kompression der dazwischen angeordneten elastischen Elemente (270) reduzierbar und/oder entweder durch Entspannung oder durch Dehnung der dazwischen angeordneten elastischen Elemente(270) erhöhbar ist.

13. Dichtungsbahn (200) nach Anspruch 11 oder 12,
**dadurch gekennzeichnet, dass**
die Ankerstücke (220) Metallplatten mit darin eingearbeiteter Seilführungsnut (228) sind, deren durch den kleinsten Abstand zwischen zwei einander gegenüberliegenden Seiten bestimmte Dicke zwischen dem Zweifachen und dem Fünffachen des Durchmessers der verwendeten Stahlseile (240) liegt.

14. Dichtungsbahn (200) nach einem der Ansprüche 11 bis 13,
**dadurch gekennzeichnet, dass**
die Außenkontur der Schmalseite (227) der Ankerstücke (220) an der dem jeweils entgegengesetzten Ende (201,202) der Dichtungsbahn (200) zugewandten Seite Ecken, Ausnehmungen oder Vorsprünge aufweist.

15. Dichtungsbahn (200) nach einem der Ansprüche 11 bis 14,
**dadurch gekennzeichnet, dass**
die fluiddichte Fläche (241) zumindest auch dadurch gebildet wird, dass die benachbarten Stahlseile (240) oder Abschnitte eines Stahlseils (240) zumindest einseitig mit einem Gewebe (242) miteinander verbunden sind und/oder dass die Trägerstruktur zumindest abschnittsweise mindestens einseitig entweder mit einer fluiddichten Schicht (243) beschichtet oder mit einem erstarrten fluiddichten Material durchtränkt ist.

16. Dichtungsbahn (200) nach Anspruch 15,
**dadurch gekennzeichnet, dass**
die Dichtungsbahn (200) an ihrer einen Längsseite einen ersten Verbindungsabschnitt (202) aufweist, in dem Gewebe (242) und/oder fluiddichte Schicht (243) der einen Oberfläche dünner ausgeführt sind und an ihrer anderen Längsseite einen zweiten Verbindungsabschnitt (203) aufweist, in dem zumindest die fluiddichte Schicht (243) und/ oder das Gewebe (242) die flexible Trägerstruktur nach außen hin auf der Seite dieser Oberfläche überragt.

17. Dichtungsbahn (200) nach einem der Ansprüche 11 bis 16,
**dadurch gekennzeichnet, dass**
die Dichtungsbahn (200) an mindestens einem ihrer Endabschnitte eine Öse (820) aufweist.

18. Dichtungsbahn (200) nach einem der Ansprüche 11 bis 17,
**dadurch gekennzeichnet, dass**
die Dichtungsbahn (200) auf mindestens einer Seite, eine Anti-Haft-Schicht aufweist, die einem Anhaften der Dichtungsbahn (200) an der entsprechenden Oberfläche des Kolbens (420) oder des Hydraulikzylinders (410) auch bei hohem Anpressdruck entgegenwirkt.

## Claims

1. Method for installing a seal (400) with seal membranes (200) on a potential energy store (100) having a hydraulic cylinder (410), in which a piston (420) is arranged for the storage of energy in the form of potential energy of the piston (420), wherein the position of the piston (420) relative to the earth's surface is variable, with a pump (P) by means of which a hydraulic fluid (430) can be pumped via lines into the hydraulic cylinder (410), so that the piston (420) is raised, and with a generator (G) for converting flow energy of hydraulic fluid (430) which is displaced out of the hydraulic cylinder (410) as the piston (420) moves downward into electricity, wherein the seal (400) is arranged between the hydraulic cylinder (410) and the piston (420), comprising the steps of:
a) providing seal membranes (200) or groups of interconnected seal membranes (200),
b) providing a crane (300) on the top side of the piston (420) or on the upper edge of the stroke cylinder,
c) providing an upper anchor box (650),
d) providing a lower anchor box (600),
e) suspending the seal membranes (200) or the interconnected groups of seal membranes (200) from the crane (300),
f) positioning the seal membranes (200) or the groups of interconnected seal membranes (200) with the crane so that the freely hanging end of the seal membranes (200) or of the seal (400) is located approximately at the level of the upper anchor box (650),
g) connecting the seal membranes (200) or the groups of interconnected seal membranes (200) to one another so that a seal (400) is formed,
h) clamping the freely hanging ends of the seal membranes (200) or of the groups of interconnected seal membranes (200) or of the seal (400) in the upper anchor box (650),
i) moving the seal membranes (200) or the groups of interconnected seal membranes (200) or the seal (400) further into the gap (401) between piston (420) and hydraulic cylinder (410) by the crane (300) so that the end of the seal membranes (200) or of the groups of interconnected seal membranes (200) or of the seal (400) on which the crane (300) engages is brought approximately to the level of the lower anchor box (600),
j) releasing the connection to the crane (300), and
k) clamping that end of the seal membranes (200) or of the groups of interconnected seal membranes (200) or of the seal (400) which is situated at the level of the lower anchor box (600) into the lower anchor box (600).

2. Method according to claim 1, **characterised in that** in step b) a crane is provided which has at least one winch (319) for each seal membrane (200) or for each group of interconnected seal membranes (200), wherein the winches (319) are movable on a circular arc.

3. Method according to claim 1 or 2, **characterised in that** in step c) the upper anchor box (650) is provided, and in step e) the lower anchor box is provided, by virtue of a groove or recesses being formed into the outer wall of the piston (420) or into the inner wall of the hydraulic cylinder (410) in encircling fashion, wherein a profile (601, 651) is arranged in the groove or recesses, the profile being locally adapted to the outer contour of the narrow side (227) of the anchor pieces (220), and by virtue of a fixing means for fixing the anchor pieces (220) in the anchor box being provided in the recess or on the profile (601, 651).

4. Method according to one of claims 1 to 3, **characterised in that** in step e) the suspension on the crane (300) takes place using a circular arc-shaped installation cross-member (210) to which the seal membrane (200) or the group of interconnected seal membranes (200) are fastened.

5. Method according to one of claims 1 to 4, **characterised in that** in step e) the suspension on the crane (300) takes place using mechanically openable clamps (250) which engage on anchor pieces (220) of the seal membrane or of the group of interconnected seal membranes (220).

6. Method according to one of claims 1 to 5, **characterised in that** before the clamping in steps h) and k), bracing means arranged in or on the seal membranes (200) are used to adapt the width of the end of the seal membrane (200) which is to be clamped in each case to the inner radius of the hydraulic cylinder (410) and/or the outer radius of the piston (420).

7. Method according to one of claims 1 to 6, **characterised in that** before the step k) is carried out the outer wall of the piston (420) and/or the side of the seal membrane (200) or of the seal (400) facing said outer wall is sprayed with a lubricant.

8. Method according to one of claims 1 to 7, **characterised in that** in the region below the lower anchor box (600), a multi-part or single-part toroidal hose (700) is provided, which has an inner diameter of the hose which corresponds to the mean width of the gap between outer wall of the piston (420) and inner wall of the hydraulic cylinder (410), and is filled with a fluid with a density lower than the density of the hydraulic fluid (430) used for the operation of the potential energy store (100).

9. Method according to one of claims 1 to 8, **characterised in that** the radius of the piston (420) is reduced in a section between the top side of the piston (420) and the upper anchor box (650).

10. Method according to one of claims 1 to 9, **characterised in that** the steps h) to k) are carried out in the specified order, wherein the seal membrane (200) or the group of interconnected seal membranes (200) or the seal (400) is loaded during step i) with a ballast.

11. Seal membrane (200) for producing a seal (400) for a potential energy store (100) by a method according to one of claims 1 to 10, wherein the seal membrane (200) has a support structure composed of steel cables (240) or sections of one or more steel cables (240) arranged mutually adjacent, and in which at least parts of the plane in which the steel cables (240) lie or at least parts of a plane running parallel thereto form a fluid-tight face (241) or layer, **characterised in that** the steel cables (240) at the ends of the seal membrane (200) are in each case fastened to a respective anchor piece (220) for anchoring the seal membrane (200) or led around the anchor piece (220), and **in that** an elastic element (270) is arranged in each case between respective two anchor pieces (220).

12. Seal membrane (200) according to claim 11, **characterised in that** the anchor pieces (220) and the elastic elements (270) each having an opening (225, 275) through which a flexible bracing means is guided, so that the spacing between two anchor pieces (220) can be reduced by compression of the elastic elements (270) arranged therebetween and/or can be increased either by relaxation or by expansion of the elastic elements (270) arranged therebetween.

13. Seal membrane (200) according to claim 11 or 12, **characterised in that** the anchor pieces (220) are metal plates with a cable-guiding groove (228) formed therein, the thickness of which, defined by the smallest spacing between two mutually opposing sides, lies between two times and five times the diameter of the steel cables (240) used.

14. Seal membrane (200) according to one of claims 11 to 13, **characterised in that** the outer contour of the narrow side (227) of the anchor pieces (220) has corners, recesses or projections on the side facing the respective opposite end (201, 202) of the seal membrane (200).

15. Seal membrane (200) according to one of claims 11 to 14, **characterised in that** the fluid-tight face (241) is formed at least **in that** the adjacent steel cables (240) or sections of a steel cable (240) are connected to one another at least on one side by means of a fabric (242), and/or **in that** the support structure is, at least in sections, at least on one side, either coated with a fluid-tight layer (243) or impregnated with a solidified fluid-tight material.

16. Seal membrane (200) according to claim 15, **characterised in that** the seal membrane (200) has, on one longitudinal side thereof, a first connecting section (202) in which fabric (242) and/or fluid-tight layer (243) of one surface are relatively thin and, on the other longitudinal side thereof, a second connecting section (203) in which at least the fluid-tight layer (243) and/or the fabric (242) protrudes outwards beyond the flexible support structure on the side of said surface.

17. Seal membrane (200) according to one of claims 11 to 16, **characterised in that** the seal membrane (200) has an eyelet (820) on at least one of its end sections.

18. Seal membrane (200) according to one of claims 11 to 17, **characterised in that** the seal membrane (200) has, on at least one side, an anti-adhesion layer which counteracts an adhesion of the seal membrane (200) to the corresponding surface of the piston (420) or of the hydraulic cylinder (410) even under high contact pressure.

## Revendications

1. Procédé de montage d'une étanchéité (400) constituée par des bandes d'étanchéité (200) sur un accumulateur d'énergie potentielle (100) comprenant un cylindre hydraulique (410) dans lequel est monté un piston (420) permettant de stocker de l'énergie sous la forme d'énergie potentielle du piston (420), la position du piston (420) par rapport à la surface terrestre pouvant être modifiée, ainsi qu'une pompe (P) permettant de pomper un fluide hydraulique (430) dans le cylindre hydraulique (410) par l'intermédiaire de conduites de sorte que le piston (420) puisse être levé, et un générateur (G) permettant de transformer l'énergie d'écoulement du fluide hydraulique (430) refoulé du cylindre hydraulique (410) lors de la descente de ce piston (420) en électricité, l'étanchéité (400) étant située entre le cylindre hydraulique (410) et le piston (420),
procédé comprenant des étapes consistant à :
a) se procurer des bandes d'étanchéité (200) ou des groupes de bandes d'étanchéité (200) liées les unes aux autres,
b) se procurer une grue (300) sur la face supérieure du piston (420) ou sur le bord supérieur du cylindre de levage,
c) se procurer un caisson d'ancrage supérieur (650),
d) se procurer un caisson d'ancrage inférieur (600),
e) suspendre les bandes d'étanchéité (200) ou les groupes de bandes d'étanchéité (200) liées les unes aux autres à la grue (300),
f) positionner les bandes d'étanchéité (200) ou les groupes de bandes d'étanchéité liées les unes aux autres (200) avec la grue (300) de sorte que l'extrémité en suspension libre des bandes d'étanchéité (200) ou de l'étanchéité (400) se trouvent environ à la hauteur du caisson d'ancrage supérieur (650),
g) lier les bandes d'étanchéité (200) ou les groupes de bandes d'étanchéité liées les unes aux autres (200) de façon à former une étanchéité (400),
h) encastrer les extrémités en suspension libre des bandes d'étanchéité (200) ou des groupes de bandes d'étanchéité liées les unes aux autres (200) ou l'étanchéité (400) dans le caisson d'ancrage supérieur (650),
i) redéplacer les bandes d'étanchéité (200) ou les groupes de bandes d'étanchéité (200) liées les unes aux autres ou l'étanchéité (400) avec la grue (300) dans l'intervalle (401) entre le piston (420) et le cylindre hydraulique (410) de sorte que l'extrémité des bandes d'étanchéité (200) ou des groupes de bandes d'étanchéité (200) liées les unes aux autres ou de l'étanchéité (400) sur laquelle la grue (300) vient en prise soit amenée environ à la hauteur du caisson d'ancrage inférieur (600),
j) supprimer la liaison avec la grue (300), et
k) insérer l'extrémité se trouvant à la hauteur du caisson d'ancrage inférieur (600) des bandes d'étanchéité (200) ou des groupes de bandes d'étanchéité (200) liées les unes aux autres ou de l'étanchéité (400) dans le caisson d'ancrage inférieur (600).

2. Procédé conforme à la revendication 1,
**caractérisé en ce que**
lors de l'étape b) on se procure une grue (300) qui comporte au moins un treuil (319), pour chaque bande d'étanchéité (200) ou pour chaque groupe de bandes d'étanchéité (200) liées les unes aux autres, les treuils (319) pouvant être déplacés sur un arc de cercle.

3. Procédé conforme à la revendication 1 ou 2,
**caractérisé en ce que**
lors de l'étape c) on se procure le caisson d'ancrage supérieur (650) et lors de l'étape e) on se procure le caisson d'ancrage inférieur (600) en introduisant sur la périphérie de la paroi externe du piston (420) ou de la paroi interne du cylindre hydraulique (410), une rainure ou des logements dans lesquels est positionné un profilé (601, 651) qui est localement adapté au contour externe d'un petit côté (227) de pièces d'ancrage (220), et en se procurant un moyen de fixation permettant de fixer les pièces d'ancrage (220) dans les caissons d'ancrage, dans le logement ou sur le profilé (601, 651).

4. Procédé conforme à l'une des revendications 1 à 3,
**caractérisé en ce que**
lors de l'étape e), la suspension à la grue (300) s'effectue par l'intermédiaire d'une traverse de montage (210) en forme d'arc de cercle sur laquelle sont fixées les bandes d'étanchéité (200) ou les groupes de bandes d'étanchéité (200) reliées les unes aux autres.

5. Procédé conforme à l'une des revendications 1 à 4,
**caractérisé en ce que**
lors de l'étape e) la suspension à la grue (300) est effectuée en utilisant des pinces (250) destinées à être ouvertes mécaniquement qui viennent en prise sur des pièces d'ancrage (220) de la bande d'étanchéité ou du groupe de bandes d'étanchéité (220) liées les unes aux autres.

6. Procédé conforme à l'une des revendications 1 à 5,
**caractérisé en ce qu'**
avant l'insertion lors des étapes h) et k), des moyens de serrage situés dans ou sur les bandes d'étanchéité (200) sont mis en oeuvre pour permettre d'adapter la largeur des extrémités à insérer respectives de la bande d'étanchéité (200) au rayon interne du cylindre hydraulique (410) ou au rayon interne du piston (420).

7. Procédé conforme à l'une des revendications 1 à 6,
**caractérisé en ce qu'**
avant la mise en oeuvre de l'étape k), on pulvérise la paroi externe du piston (420) et/ou la face tournée vers celui-ci de la bande d'étanchéité (200) ou de l'étanchéité (400) avec un agent lubrifiant.

8. Procédé conforme à l'une des revendications 1 à 7,
**caractérisé en ce que**
dans la zone située au-dessous du caisson d'ancrage inférieur (600) se procure un tuyau torique (700) en plusieurs parties ou en une seule partie ayant un diamètre interne qui correspond à la largeur médiane de l'intervalle entre la paroi externe du piston (420) et la paroi interne du cylindre hydraulique (410), et on le remplit d'un fluide dont la densité est inférieure à la densité du fluide hydraulique (430) utilisé pour faire fonctionner l'accumulateur d'énergie cinétique (100).

9. Procédé conforme à l'une des revendications 1 à 8,
**caractérisé en ce que**
le rayon du piston (420) est réduit dans un segment situé entre sa face supérieure et le caisson d'ancrage supérieur (650) .

10. Procédé conforme à l'une des revendications 1 à 9,
**caractérisé en ce que**
les étapes h) à k) sont mises en oeuvre dans cet ordre, la bande d'étanchéité (200) ou le groupe de bandes d'étanchéité (200) liées les unes aux autres ou l'étanchéité (400) étant chargée(s) lors de l'étape i) avec un moyen formant ballast.

11. Bande d'étanchéité (200) permettant d'obtenir une étanchéité (400) sur un accumulateur d'énergie cinétique (100) par la mise en oeuvre du procédé conforme à l'une des revendications 1 à 10, la bande d'étanchéité (200) ayant une structure de support constituée par des câbles en acier (240) positionnés côte à côte ou par des segments positionnés côte à côte d'un ou de plusieurs câble (s) en acier (240), et dans laquelle au moins des parties du plan dans lequel sont situés les câbles en acier (240) ou au moins des parties d'un plan s'étendant parallèlement à celui-ci, forment une surface (241) ou une couche étanche aux fluides,
**caractérisée en ce que**
les câbles en acier (240) sont respectivement fixés, aux extrémités de la bande d'étanchéité (200), à une pièce d'ancrage (220) permettant d'ancrer la bande d'étanchéité (200), ou passant autour de la pièce d'ancrage (220), et, entre deux pièces d'ancrage respectives (220) est respectivement positionné un élément élastique (270).

12. Bande d'étanchéité (200) conforme à la revendication 11,
**caractérisée en ce que**
les pièces d'ancrage (220) et les éléments élastiques (270) comportent respectivement une ouverture (225, 275) au travers de laquelle passe des moyens de serrage flexibles de sorte que la distance entre deux pièces d'ancrage (220) puisse être réduite par compression des éléments élastiques (270) situés entre celles-ci, et/ou puisse être augmentée par détente, ou par dilatation des éléments élastiques (270) situés entre celles-ci.

13. Bande d'étanchéité (200) conforme à la revendication 11 ou 12,
**caractérisée en ce que**
les pièces d'ancrage (220) sont des plaques métalliques dans lesquelles sont usinées des rainures de guidage de câbles (228), dont l'épaisseur, déterminée par la plus petite distance entre deux côtés opposés est située entre deux fois et cinq fois le diamètre des câbles en acier (240) utilisés.

14. Bande d'étanchéité (200) conforme à l'une des revendications
11 à 13,
**caractérisée en ce que**
le contour externe du petit côté (227) des pièces d'ancrage (220) comporte des coins, des évidements ou des saillies, sur le côté tourné vers l'extrémité respectivement opposée (201, 202) de la bande d'étanchéité (200).

15. Bande d'étanchéité (200) conforme à l'une des revendications
11 à 14,
**caractérisée en ce que**
la surface étanche aux fluides (241) est au moins formée du fait que les câbles en acier (240) voisins ou les segments d'un câble en acier (240) sont reliés entre eux au moins d'un côté par un tissu (242), et/ou que la structure de support est, au moins par segments, au moins d'un côté re-couverte d'une couche étanche aux fluides (243) ou imprégnée d'un matériau étanche aux fluides durci.

16. Bande d'étanchéité (200) conforme à la revendication 15,
**caractérisée en ce qu'**
elle comporte sur l'un de ses côtés longitudinaux, un premier segment de liaison (202) dans lequel le tissu (242) et/ou la couche étanche au fluide (243) est (sont) plus mince(s) que la surface et sur son autre côté longitudinal un second segment de liaison (203) dans lequel au moins la couche étanche aux fluides (243) ou le tissu (242) dépasse(nt) vers l'extérieur de la structure de support flexible sur le côté de cette surface.

17. Bande d'étanchéité (200) conforme à l'une des revendications
11 à 16,
**caractérisée en ce que**
la bande d'étanchéité (200) comporte un oeillet (820) sur au moins l'un de ses segments d'extrémité.

18. Bande d'étanchéité (200) conforme à l'une des revendications
11 à 17,
**caractérisée en ce qu'**
elle comporte, sur au moins un côté, une couche antiadhésive qui agit à l'encontre d'une adhésion de la bande d'étanchéité (200) sur la surface correspondante du piston (420) ou du cylindre hydraulique (410) également en présence d'une pression de compression élevée.
